# EUROPÄISCHE PATENTSCHRIFT

(11) **EP 3 554 706 B1**
(45) Veröffentlichungstag und Bekanntmachung des Hinweises auf die Patenterteilung: **13.10.2021**
(21) Anmeldenummer: 17821518.2
(22) Anmeldetag: 11.12.2017
(51) Int. Cl.: B01L 3/02, G01F 11/02

(54) **PIPETTIERVORRICHTUNG ZUR VERBESSERTEN IMPULSARTIGEN FLÜSSIGKEITSPIPETTIERUNG**
PIPETTING DEVICE FOR AN IMPROVED PULSE-BASED PIPETTING OF LIQUID
DISPOSITIF DE PIPETTAGE DESTINÉ À AMÉLIORER LE PIPETTAGE DE LIQUIDE PAR IMPULSIONS

(30) Priorität: 15.12.2016 DE 102016225209
(43) Veröffentlichungstag der Anmeldung: 23.10.2019
(73) Patentinhaber: Hamilton Bonaduz AG, 7402 Bonaduz (CH)
(72) Erfinder: ROMER, Hanspeter, 8340 Hinwil (CH); ETTINGER, Reto, 8610 Uster (CH); GYSEL, Fridolin, 8134 Adliswil (CH); RAST, Jürg, 8753 Mollis (CH); HILTI, Jonas, 9496 Balzers (LI)
(74) Vertreter: Ruttensperger Lachnit Trossin Gomoll
(86) Internationale Anmeldenummer: PCT/EP2017/082249
(87) Internationale Veröffentlichungsnummer: WO 2018/108825

(56) Entgegenhaltungen:
- EP-A1- 1 206 966
- WO-A1-03/078066
- WO-A1-2017/017084
- DE-A1-102008 016 549
- US-A1- 2005 214 172
- US-A1- 2005 214 172
- US-A1- 2006 071 973

## Beschreibung

Die vorliegende Erfindung betrifft eine Pipettiervorrichtung zur impulsartigen Dispensation von kleinen Dosierflüssigkeitsdosen von nicht mehr als 1 µl aus einer größeren in der Pipettiervorrichtung bereitgestellten Dosierflüssigkeitsmenge unter Vermittlung eines druckveränderlichen Arbeitsgases, wobei die Pipettiervorrichtung umfasst:
- einen wenigstens teilweise mit Arbeitsgas gefüllten Pipettierkanal,
- eine Druckveränderungsvorrichtung zur Veränderung des Drucks des Arbeitsgases, und
- eine Steuervorrichtung zur Ansteuerung der Druckveränderungsvorrichtung, wobei die Steuervorrichtung dazu ausgebildet ist, die Druckveränderungsvorrichtung
- bezogen auf einen Haltebezugsdruck im Pipettierkanal, welcher zum unbewegten Halten der Dosierflüssigkeitsmenge erforderlich ist - zur Erzeugung eines Überdruckimpulses im Pipettierkanal mit einer Impulsdauer von nicht mehr als 40 ms anzusteuern.

Die vorliegende Erfindung betrifft weiter ein Verfahren zur impulsartigen Dispensation von in einer Pipettierspitze aufgenommenen Dosierflüssigkeiten aus der Pipettierspitze mit einem Dispensationsvolumen von nicht mehr als 1 µl für einen einzelnen Dispensationsvorgang, umfassend den Schritt eines Erzeugens eines Überdruckimpulses in einem Arbeitsgas, welches auf einer von einer Pipettieröffnung abgewandten Seite mit der aufgenommenen Dosierflüssigkeit Druck übertragend in Verbindung steht, um dadurch einen Flüssigkeitstropfen auf der der Pipettieröffnung zugewandten Seite der Dosierflüssigkeit aus dieser heraus zu lösen und von der Dosierflüssigkeit weg zu beschleunigen.

Eine gattungsgemäße Vorrichtung sowie ein gattungsgemäßes Verfahren sind aus der DE 2008 016 549 A1 bekannt.

Dabei ist mit einem "Überdruckimpuls" bzw. einer "impulsartigen" Dispensation ein Überdruckimpuls mit einer gesamten Impulsdauer von nicht mehr als 40 ms bezeichnet. Die Dauer des Überdruckimpulses ist dabei die Zeitspanne zwischen dem Verlassen des Haltebezugsdrucks und der erneuten Rückkehr zu diesem. Dabei folgt üblicherweise dem Überdruckimpuls ein betragsmäßig geringerer Unterdruckimpuls, sodass die erste Rückkehr des Drucks des Arbeitsgases zum Niveau des Haltebezugsdrucks ein Durchgang durch das Niveau des Haltebezugsdrucks ist. Bei dem in der Realität am häufigsten zu erwartenden Fall von Druckschwingungen im Arbeitsgas nach Erzeugen des Überdruckimpulses ist oben mit der "erneuten Rücckehr" zum Haltebezugsdruck die erste von gegebenenfalls mehreren Rückkehren gemeint. Bevorzugt liegen sowohl der Überdruckimpuls als auch der anschließende Unterdruckimpuls innerhalb des angegebenen Zeitfensters von 40 ms. Auch die Dauer des an den Überdruckimpuls anschließenden Unterdruckimpulses ist zwischen dem ersten Durchgang durch das Haltebezugsdruckniveau zur Unterdruckseite und der ersten Rückkehr zum Haltebezugsdruckniveau zu messen.

Mit "impulsartiger" Dispensation ist eine vom herkömmlichen bekannten Pipettierbetrieb abweichende Dispensation bezeichnet, bei welcher durch den Überdruckimpuls des Arbeitsgases ein Druckschlag vom Arbeitsgas auf die von einer Dosieröffnung abgewandte Seite der in einer Pipettiervorrichtung aufgenommenen Dosierflüssigkeitsmenge ausgeübt wird, sodass sich dieser Druckschlag durch die inkompressible Dosierflüssigkeitsmenge bis zu einem der Pipettieröffnung näher gelegenen Meniskus der aufgenommenen Dosierflüssigkeitsmenge fortpflanzt und dort zum Abschleudern eines Dosierflüssigkeitstropfens führt.

Auf diese Art und Weise lassen sich sehr kleine Flüssigkeitsmengen von weniger als 1 µl bzw. bevorzugt von weniger als 600 nl mit hoher Wiederholgenauigkeit dosieren und sogar aliquotieren.

Im Gegensatz dazu wird bei herkömmlichem Dispensieren die mit der Pipettiervorrichtung aufgenommene Dosierflüssigkeit durch Erhöhung des Drucks im Arbeitsgas ausgeschoben, bis sich entweder ein Tropfen von der Pipettieröffnung ablöst oder es wird durch die Pipettieröffnung hindurch Dosierflüssigkeit auf ein von der Dosierflüssigkeit benetztes Substrat oder in eine bereits vorhandene Flüssigkeit dosiert, von welchem bzw. von welcher die Pipettieröffnung nach Abgabe der vorbestimmten Dosiermenge abgehoben wird.

Während also beim herkömmlichen Dispensieren die Druckänderung im Arbeitsgas, und somit die Bewegung eines Pipettierkolbens, synchron oder quasi-synchron mit der Abgabe von Dosierflüssigkeit durch eine Pipettieröffnung der Pipettiervorrichtung erfolgt, ist die der vorliegenden Erfindung zu Grunde liegende impulsartige Dispensation diesbezüglich asynchron, d. h. auf eine impulsartige, schlagartige Erzeugung eines Überdruckimpulses im Arbeitsgas wird der Tropfen der Dosierflüssigkeit in der Regel erst von der aufgenommenen Dosierflüssigkeitsmenge abgeschleudert, nachdem der Überdruckimpuls abgeklungen ist oder wenigstens im Abklingen begriffen ist. Die Abgabe des Dosierflüssigkeitstropfens erfolgt somit nicht synchron mit einer Bewegung des Pipettierkolbens.

Bei der impulsartigen Dispensation werden die zu dosierenden Flüssigkeitsmengen als Tropfen in der Regel mit einer Beschleunigung von der in der Pipettiervorrichtung aufgenommenen Dosierflüssigkeitsmenge abgegeben, welche die durch das Schwerefeld der Erde erzeugte Erdbeschleunigung übersteigt. Dies bedeutet, die bei impulsartiger Dispensation durch die Pipettiervorrichtung von der aufgenommenen Dosierflüssigkeitsmenge abgelösten Dosiertropfen bewegen sich bei Dispensation in Schwerkraftwirkungsrichtung schneller als lediglich im freien Fall von der Pipettiervorrichtung weg.

Große Mengen an Dosierflüssigkeit, also Mengen von mehr als 1 µl, werden in der Regel in einem synchronen Betriebsmodus der Pipettiervorrichtung pipettiert, in welchem die Dosierflüssigkeit in der Pipettierspitze, genauer ihr zum Kolben hinweisender Meniskus, der dosierseitigen Endfläche des Kolbens synchron folgt. Dies bedeutet, dass sich der Meniskus dann, wenn der Kolben in einer Dispensationsrichtung als einer Pipettierrichtung bewegt wird, gemeinsam mit der dosierseitigen Endfläche des Kolbens zur Pipettieröffnung der Pipettiervorrichtung hin bewegt, und sich dann, wenn der Kolben in einer Aspirationsrichtung als einer Pipettierrichtung bewegt wird, gemeinsam mit der dosierseitigen Endfläche des Kolbens von der Pipettieröffnung der Pipettiervorrichtung wegbewegt. Es kann zu einem geringfügigen zeitlichen Versatz zwischen der Bewegung der dosierseitigen Endfläche des Kolbens und dem Meniskus der Dosierflüssigkeit kommen, da das zwischen dem Kolben und der Dosierflüssigkeit vorhandene Arbeitsgas zunächst erst durch die Kolbenbewegung auf ein Druckniveau gebracht werden muss, auf welchem der gewünschte Pipettiervorgang ablaufen kann. Dies ist beim Aspirieren ein Unterdruck gegenüber dem Umgebungsdruck, sodass Dosierflüssigkeit getrieben durch den Differenzdruck zwischen dem Druck des Arbeitsgases und dem Umgebungsdruck von einem Dosierflüssigkeitsvorrat, in welchen die Pipettieröffnung der Pipettierspitze eingetaucht ist, in die Pipettierspitze einströmt. Dies ist beim Dispensieren ein Überdruck gegenüber dem Umgebungsdruck, sodass in der Pipettierspitze aufgenommene Dosierflüssigkeit getrieben vom Differenzdruck zwischen dem Druck des Arbeitsgases und dem Umgebungsdruck durch die Pipettieröffnung der Pipettierspitze austritt. Das kompressible Arbeitsgas wirkt somit wie eine Gasfeder. Aufgrund des geringen, aber vorhandenen zeitlichen Versatzes zwischen der Kolbenbewegung und der Bewegung des Meniskus der Dosierflüssigkeit in der Pipettierspitze wird das herkömmliche Pipettieren von Dosierflüssigkeit nachfolgend als quasi-synchroner Betriebsmodus bezeichnet.

Beim herkömmlichen Dispensieren bei quasi-synchroner Bewegung von Kolben und Dosierflüssigkeit, wird der Abriss der zu dispensierenden Dosierflüssigkeit von der Pipettierspitze unter Ausnutzung von Trägheitskräften bewirkt. Der Kolben wird eine vorbestimmte Zeit in Dispensationsrichtung bewegt und dann, wenn ein Abriss von aus der Pipettierspitze hinaus verdrängter Dosierflüssigkeit gewünscht ist, möglichst schlagartig angehalten. Die Massenträgheit der bereits verdrängten Dosierflüssigkeit, die sich aufgrund der vergangenen Kolbenbewegung noch in der Dispensationsbewegung befindet, führt dann zum Abschnüren der Dosierflüssigkeit an der Pipettieröffnung und schließlich zum Abriss derselben. Der Zusammenhang zwischen Kolbenbewegung und unter Vermittlung des Arbeitsgases verdrängter Dosierflüssigkeit wird üblicherweise empirisch für verschiedene Flüssigkeitsklassen ermittelt und ist in einem Datenspeicher der Pipettiervorrichtung gespeichert. Bei diesem quasi-synchronen Betriebsmodus übersteigt das von der dosierseitigen Kolbenfläche während der Bewegung des Kolbens in Pipettierrichtung überstrichene Volumen (allgemein Pipettiervolumen oder abhängig von der Bewegungsrichtung des Kolbens Aspirationsvolumen bzw. Dispensationsvolumen) das tatsächlich pipettierte Volumen der Dosierflüssigkeit in der Regel um nicht mehr als 5 %. Das Verhältnis von Pipettiervolumen zu tatsächlich pipettiertem Dosierflüssigkeitsvolumen ist folglich in der Regel nicht größer als 1,05.

Durch den trägheitsinduzierten Flüssigkeitsabriss an der Pipettieröffnung bleibt mitunter Dosierflüssigkeit unerwünschterweise außen an der Pipettierspitze im Bereich der Pipettieröffnung haften. Um zu vermeiden, dass diese anhaftende Flüssigkeitsmenge ganz oder teilweise unkontrolliert abtropft, wird der Kolben nach dem Flüssigkeitsabriss ein kleines Stück in Aspirationsrichtung bewegt, um die außen anhaftende Dosierflüssigkeit durch die Pipettieröffnung zurück in die Pipettierspitze zu saugen.

Diese Dispensation von Dosierflüssigkeit unter Ausnutzung von Trägheitskräften funktioniert abhängig von der jeweiligen Dosierflüssigkeit nicht mehr sicher für Einzel-Dosiervolumina von weniger als 3 bis 5 µl, da dann aufgrund der geringen Masse die erzielbaren Trägheitskräfte andere Krafteinflüsse, insbesondere aus der Oberflächenspannung, nicht mehr ausreichend sicher überwinden können, um ein sicheres, wiederholbares Ablösen derart kleiner Dosierflüssigkeitsmengen gewährleisten zu können.

Von den zuvor genannten Pipettiervorrichtungen zu unterscheiden sind die sogenannten "Dispensierer" oder "Dispenser", die in der Regel Dosierflüssigkeiten ausschließlich dispensieren, jedoch nicht aspirieren können. Dispenser erhalten die zu dispensierende Dosierflüssigkeit in der Regel über Zuführkanäle aus einem Vorrat, welcher mit einem durch den Kolben veränderlichen Dosierraum des Dispensers in Strömungsverbindung steht.

Von den zuvor genannten Pipettiervorrichtungen weiter zu unterscheiden sind Pipettiervorrichtungen, bei welchen die dosierseitige Endfläche des Kolbens unmittelbar in Kontakt mit der zu pipettieren Dosierflüssigkeit steht. Es befindet sich dann zwischen dem Kolben und der Dosierflüssigkeit kein Arbeitsgas.

Wegen der unmittelbaren Bewegungskopplung von Kolben und Dosierflüssigkeit in derartigen Pipettiervorrichtungen bezeichnet man deren Pipettierart in der Fachwelt mit dem englischen Begriff "Positive Displacement". Das Weglassen von kompressiblem im Arbeitsgas erhöht zwar die theoretische erzielbare Pipettiergenauigkeit, führt jedoch in der Praxis zu Schwierigkeiten an anderer Stelle. Zum einen lässt sich ein Gaseinschluss im Pipettiervolumen beim Aspirieren nicht vollkommen sicher ausschließen, sodass auch beim Positive-Displacement-Pipettieren Gas- bzw. Luftblasen in der aspirierten Dosierflüssigkeit auftreten können, was sich nachteilig auf die erreichbare Pipettiergenauigkeit auswirkt. Zum anderen ist die beim Positive-Displacement-Pipettieren erzielbare Pipettiergenauigkeit dann, wenn die Dosierflüssigkeit zur Schaumbildung neigt, äußerst gering. Außerdem muss wegen der Benetzung des Pipettierkolbens durch die Dosierflüssigkeit dann, wenn die zu pipettierende Dosierflüssigkeit gewechselt werden soll, nicht nur eine Pipettierspitze, sondern mit dieser auch der Pipettierkolben gewechselt werden, was einen erheblichen Montageaufwand und daraus folgend erhebliche Kosten bedeutet.

Im Gegensatz dazu wird die Pipettierart von gattungsgemäßen Pipettiervorrichtungen mit einem Arbeitsgas zwischen dem Kolben und der Dosierflüssigkeit in der Fachwelt als "Air Displacement" bezeichnet, wenngleich das Arbeitsgas nicht notwendigerweise Luft sein muss, sondern auch ein Inertgas oder ein quasi-inertes Gas, wie etwa Stickstoff, sein kann. Bei dieser Pipettierart ist der Pipettierkolben von der Dosierflüssigkeit durch eine Gas-, insbesondere durch eine Luftsäule dauerhaft und vollständig getrennt.

Zu unterscheiden ist die vorliegende erfindungsgemäße Pipettiervorrichtung auch von solchen, die eine Säule einer Systemflüssigkeit als Kolben verwenden. Eine solche Pipettiervorrichtung ist aus der US 2005/0214172 A1 bekannt. Von derartigen Systemflüssigkeiten geht ein gewisses Maß an Kontaminationsrisiko aus, da bisweilen nicht ausgeschlossen werden kann, dass Systemflüssigkeit, also ein Teil eines gleichsam flüssigen Kolbens, in die zu pipettierende Dosierflüssigkeit gelangt. Um dieses Kontaminationsrisiko zu vermindern schlägt die US 2005/0214172 A1 vor, eine kleine Luftblase zwischen der Systemflüssigkeit und der Dosierflüssigkeit anzuordnen. Hierzu darf der Durchmesser des Pipettierkanals eine bestimmte Größe nicht überschreiten, damit die Luftblase zwischen Systemflüssigkeit und Dosierflüssigkeit verbleibt und nicht durch die Systemflüssigkeit hindurch zum Pipettierkolben aufsteigt. Die aus der US 2005/0214172 A1 bekannte Pipettiervorrichtung dispensiert alleine nach dem oben beschriebenen Trägheitsprinzip. Ihr Pipettierkolben wird möglichst schnell beschleunigt und dann zur Ablösung eines kleinen Dosierflüssigkeitstropfens möglichst schnell angehalten. Um eine höhere Trägheitskraft zu erzielen, wird bei der aus der US 2005/0214172 A1 bekannten Pipettiervorrichtung zunächst die aufgenommene Dosierflüssigkeitssäule von der Pipettieröffnung weg in den Pipettierkanal hineinbewegt, um so einen Beschleunigungsweg der Dosierflüssigkeit vor der trägheitsinduzierten Tropfenabgabe zu erzielen. So erreicht die aus der US 2005/0214172 A1 bekannte Pipettiervorrichtung trägheitsinduziert eine Dispensation von Dosierflüssigkeitsdosen von weniger als 1 µl.

Eine Pipettiervorrichtung, die eine Mischung aus einem oben genannten Dispenser und einer zuvor genannten Pipettiervorrichtung mit Systemflüssigkeit ist, ist aus der US 2006/0071973 A1 bekannt. Diese Druckschrift offenbart einen aspirationsfähigen Dispenser, dessen Pipettierkolben aus einer Ferro-Flüssigkeit gebildet ist. Der flüssige, als Suspension von ferromagnetischen Partikeln in einer Matrixflüssigkeit ausgebildete Kolben kann durch Anlegen eines äußeren Magnetfeldes bewegt werden. Ein zeitlich vorübergehendes Anlegen eines äußeren Magnetfeldes führt nicht nur zu einer Kolbenbewegung, sondern für die Dauer der Ausübung des Magnetfelds auch zu einer Änderung der Viskosität des flüssigen Kolbens. Zur Trennung des ferroflüssigen Kolbens von einer zu dispensierenden Dosierflüssigkeit lehrt auch die US 2006/0071973 A1, eine Luftblase zwischen dem ferroflüssigen Kolben und der Dosierflüssigkeit anzuordnen, um ein Kontaminationsrisiko zu verringern. Die US 2006/0071973 A1 weist jedoch gleichzeitig daraufhin, dass eine solche Anordnung einer Luftblase den bekannten Dispenser in Bezug auf Kraft und Geschwindigkeit schwächt. Außerdem kann der Dispenserkanal bestimmte Abmessungen nicht übersteigen, um die Schichtung von Dosierflüssigkeit, Kolbenflüssigkeit und gegebenenfalls Luftblase im Dispenserkanal nicht zu gefährden.

Der Kolben der Pipettiervorrichtung der vorliegenden Erfindung ist wenigstens abschnittsweise, zur Vermeidung eines Kontaminationsrisikos bevorzugt vollständig als Festkörper ausgebildet. Bei nur abschnittsweiser Ausbildung als Festkörper ist wenigstens die zur Dosierflüssigkeit hinweisende dosierseitige Endfläche des Kolbens als Festkörper ausgebildet, um eine Übertragung von Flüssigkeit zu Flüssigkeit zu verhindern.

Eine impulsartige Dispensation im Sinne der vorliegenden Erfindung ist ebenso bekannt aus der US 2001/0016358 A1. Dort wird jedoch kein Überdruckimpuls durch ein Arbeitsgas vermittelt, sondern es wird durch einen Piezoaktuator unmittelbar ein körperlicher Schlag auf den der Pipettieröffnung ferner liegenden Meniskus der in der Pipettiervorrichtung bereitgestellten Dosierflüssigkeit abgegeben und dadurch am entgegengesetzten Längsende der bereitgestellten Dosierflüssigkeitssäule von dem der Pipettieröffnung näher gelegenen Meniskus ein Tropfen abgeschleudert. Ähnliche Pipettiervorrichtungen und -verfahren, die Tropfen impulsartig durch einen mechanischen Impuls entweder unmittelbar auf eine im Pipettierkanal aufgenommene Dosierflüssigkeit oder auf einen unmittelbar die Pipettierflüssigkeit kontaktierenden Kolben bewirken, sind aus der WO 03/078066 A1 oder aus der EP 1 206 966 A1 bekannt.

Die Nachteile dieses bekannten Verfahrens liegen auf der Hand: Durch Kontakt mit der Dosierflüssigkeit durch den Piezoaktuator ist ein erhöhtes Kontaminationsrisiko gegeben.

Eine Pipettiervorrichtung sowie ein Verfahren zur impulsartigen Dispensierung im Air-Displacement-Verfahren unter Verwendung eines permanentmagentischen, linearmotorisch angetriebenen Kolbens sind in der zum Zeitpunkt der Anmeldung der vorliegenden Erfindung unveröffentlichten deutschen Patentanmeldung 10 2015 214 566.2 und der parallelen, ebenfalls nachveröffentlichten WO 2017/017084 A1 beschrieben.

Beim impulsartigen Dispensieren von kleinen Dosierflüssigkeitsdosen können abhängig von der gewählten Dosierflüssigkeit, beispielsweise abhängig von deren Viskosität, Dichte oder/und Oberflächenspannung sowie weiter abhängig von den Parametern des Überdruckimpulses und gegebenenfalls des anschließenden Unterdruckimpulses unerwünschte Begleiterscheinungen auftreten. Beispielsweise kann statt lediglich eines einzigen gewünschten Dosiertropfens am abgebenden pipettieröffnungsnäheren Meniskus eine Vernebelung von Dosierflüssigkeit bzw. eine Abgabe von Dosierflüssigkeit durch einen von unerwünschten Satellitentropfen begleiteten Dosiertropfen auftreten, was mit einer unerwünschten Verminderung der erzielbaren Dosiermengengenauigkeit verbunden ist.

Es ist daher Aufgabe der vorliegenden Erfindung, eine technische Lehre anzugeben, welche eine impulsartige Dispensation von kleinen Flüssigkeitsmengen mit hoher reproduzierbarer Genauigkeit ermöglicht.

Diese Aufgabe wird gemäß der vorliegenden Erfindung gelöst durch eine Pipettiervorrichtung mit allen Merkmalen des Anspruchs 1 sowie durch ein Pipettierverfahren mit allen Merkmalen des Anspruchs 10.

Durch die beschriebene Ausbildung der Steuervorrichtung ist die Pipettiervorrichtung grundsätzlich erfindungsgemäß dazu ausgebildet, vor der Erzeugung des Überdruckimpulses eine in der Pipettiervorrichtung aufgenommene Dosierflüssigkeitsmenge, welche in der Regel als Dosierflüssigkeitssäule vorliegt, ein Stück weit von einer Pipettieröffnung weg in die Pipettiervorrichtung hinein zu bewegen. Dadurch kann zwischen der Pipettieröffnung der Pipettiervorrichtung und einem der Pipettieröffnung näher liegenden Meniskus der in der Pipettiervorrichtung bereitgestellten Dosierflüssigkeitsmenge ein Gasvolumen bereitgestellt werden.

Unabhängig davon, in welcher Weise die Pipettieröffnung an der Pipettiervorrichtung bereitgestellt ist, kann das gewünschte Gasvolumen stets durch die beschriebene Ausbildung der Steuervorrichtung erzeugt werden.

Es hat sich in Versuchen herausgestellt, dass die impulsartige Dispensation eines Flüssigkeitstropfens gewünschten Dosierflüssigkeitsvolumens ausgehend von einem innerhalb eines Aufnahmevolumens der Pipettiervorrichtung mit Abstand von der Pipettieröffnung gelegenen pipettieröffnungsnäheren Meniskus der Dosierflüssigkeitsmenge für die Ausbildung eines definierten Dosiertropfens vorteilhaft ist. Daher ist erfindungsgemäß die Pipettiervorrichtung der vorliegenden Anmeldung hierzu ausgebildet.

Die Auswirkungen eines Zurückziehens der in der Pipettiervorrichtung bereitgestellten Dosierflüssigkeitsmenge von der Pipettieröffnung weg in einen Aufnahmeraum der Pipettieröffnung hinein sind technisch nicht restlos geklärt, jedoch phänomenologisch reproduzierbar.

Möglicherweise ist es von Vorteil, wenn die Dosierflüssigkeitsmenge oder wenigstens der abgebende pipettieröffnungsnähere Meniskus einer in der Pipettiervorrichtung bereitgestellten Dosierflüssigkeitssäule für die Dauer der Tropfenbildung und -abgabe durch Seitenwände geführt ist. Selbst eine minimale Bewegung der gesamten Dosierflüssigkeitssäule aufgrund des Überdruckimpulses im Arbeitsgas findet somit in einer fluidmechanisch definierten Umgebung statt.

Befindet sich der abgebende Meniskus, wie etwa in der DE 10 2015 214 566 A1 und der WO 2017/017084 A1 beschrieben, dagegen unmittelbar an der Pipettieröffnung, ist seine Gestalt, beispielsweise seine Wölbung bzw. Krümmung undefiniert, und ist seine durch den Überdruckimpuls möglicherweise verursachte Verformung weniger stark definiert als bei der vorliegend vorgestellten erfindungsgemäßen Pipettiervorrichtung.

Zwar ist grundsätzlich - jedoch außerhalb der vorliegenden Erfindung liegend - eine impulsartige Dispensation von Dosierflüssigkeit auch dann möglich, wenn der abgebende Meniskus sich unmittelbar an der Pipettieröffnung befindet und beispielsweise den Rand der Pipettieröffnung benetzt, jedoch sind dann die an der Pipettiervorrichtung für eine gegebene Dosierflüssigkeit einzustellenden Betriebsparameter, um die Abgabe einer gewünschten kleinen Dosierflüssigkeitsdosis zu erzielen, in wesentlich engeren Grenzen zu wählen. Mit anderen Worten: Durch die erfindungsgemäße Anordnung des abgebenden Meniskus der in der Pipettiervorrichtung bereitgestellten Dosierflüssigkeit in einem Aufnahmeraum der Pipettiervorrichtung mit Abstand von der Pipettieröffnung ist der impulsartige Dispensationsvorgang gegen äußere Einflüsse und Veränderungen der Betriebsparameter weniger empfindlich als wenn sich der abgebende Meniskus unmittelbar an der Pipettieröffnung befände.

Ein weiterer positiver Einfluss liegt möglicherweise darin, dass durch die Ansteuerung der Druckveränderungsvorrichtung zur Erzeugung eines Unterdrucks und der damit verbundenen Verlagerung des abgebenden pipettieröffnungsnäheren Meniskus von der Pipettieröffnung weg der untere Meniskus in Bereiche der Pipettiervorrichtung zurückgezogen wird, die zuvor von Dosierflüssigkeit benetzt waren, was unmittelbar nach Aspiration einer Dosierflüssigkeitsmenge zu deren Bereitstellung in der Pipettiervorrichtung nicht notwendigerweise der Fall ist, wenn der untere Meniskus in nicht vorhersagbarer Gestalt sich unmittelbar an der Pipettieröffnung befindet. Durch das Zurückziehen des unteren Meniskus bzw. der bereitgestellten Dosierflüssigkeitsmenge weiter in die Pipettiervorrichtung hinein liegt der abgebende Meniskus in der Regel mit einer vorhersagbar definierten Gestalt vor, die die Wiederholbarkeit der impulsartigen Dispensation und ihrer Dispensationsergebnisse erheblich verbessert.

Ebenso wird die eingangs genannte Aufgabe gelöst durch ein Verfahren mit allen Merkmalen des Anspruchs 10. Ein solches Verfahren umfasst vor dem Erzeugen des Überdruckimpulses folgenden Schritt:
- bezogen auf den Haltebezugsdruck im Pipettierkanal, welcher zum unbewegten Halten der Dosierflüssigkeitsmenge erforderlich ist: Erzeugen eines Unterdrucks im Arbeitsgas und dadurch Bewegen der aufgenommenen Dosierflüssigkeit von der Pipettieröffnung weg, unter Bildung oder Vergrößerung eines Gasvolumens zwischen der Dosierflüssigkeit und der Pipettieröffnung.

Zu den Vorteilen und Wirkungen des erfindungsgemäßen Verfahrens wird auf die Ausführungen zur erfindungsgemäßen Pipettiervorrichtung verwiesen, welche das mit der erfindungsgemäßen Pipettiervorrichtung ausführbare Verfahren zur impulsartigen Dispensation von Dosierflüssigkeit beschreiben.

Der Vorteil der vorliegenden Erfindung liegt vor allem in der Möglichkeit der Aliquotierung von Flüssigkeitsdosen mit hoher Wiederholgenauigkeit. So kann beispielsweise in der Pipettiervorrichtung eine Dosierflüssigkeitsmenge von 30 bis 80 µl aufgenommen sein, beispielsweise etwa 40 µl, von welcher mit jedem Überdruckimpuls etwa 500 nl als Dosiertropfen abgeschleudert werden. In Versuchen wurden dabei bei 40 µl aufgenommenen Glycerins als Dosierflüssigkeit bei Raumtemperatur aufeinanderfolgend 20 Dosierflüssigkeitstropfen impulsartig dispensiert, jeweils mit einem Ziel-Dosiervolumen von 448 nl, wobei die Ungenauigkeit der Dosiertropfenvolumina über die 20 Dispensationen hinweg weniger als 3 % betrug.

Zur Sicherstellung der Vorteile der vorliegenden Erfindung auch beim Aliquotieren kann daher gemäß einer Weiterbildung der vorliegenden Erfindung vorgesehen sein, dass die Steuervorrichtung dazu ausgebildet ist, zwischen der Erzeugung zweier Überdruckimpulse, welche jeweils einem anderen von zwei unmittelbar aufeinander folgenden impulsartigen Dispensationsvorgängen zugeordnet sind, die Druckveränderungsvorrichtung zur Erzeugung des Haltebezugsdrucks und danach zur Erzeugung des Unterdrucks anzusteuern. Entsprechendes gilt für das erfindungsgemäße Pipettierverfahren, welches zwischen dem Erzeugen von zwei unterschiedlichen, jedoch unmittelbar aufeinanderfolgenden impulsartigen Dispensationsvorgängen zugeordneten Überdruckimpulsen jeweils die Schritte umfassen kann, zunächst den Haltebezugsdruck zu erzeugen, welcher erforderlich ist, die in der Pipettiervorrichtung aufgenommene Dosierflüssigkeitsmenge unbewegt in der Pipettiervorrichtung zu halten, und anschließend bezüglich des Haltebezugsdrucks einen Unterdruck im Arbeitsgas zu erzeugen und dadurch den pipettieröffnungsnäheren Meniskus der bereitgestellten Dosierflüssigkeit von einer Pipettieröffnung weg in die Pipettiervorrichtung hinein unter Bildung eines Gasvolumens zwischen der Dosierflüssigkeit und der Pipettieröffnung zu verlagern.

Nachzutragen ist, dass die oben geschilderten Vorteile beim impulsartigen Dispensieren von Dosierflüssigkeit mit von der Pipettieröffnung zurückgezogenem pipettieröffnungsnäheren Meniskus sowohl bei sich konisch zur Pipettieröffnung hin verjüngenden Pipettierkanälen als auch bei zylindrisch mit konstantem Querschnitt zur Pipettieröffnung hin sich erstreckenden Pipettierkanälen erzielbar sind. Auf die Gestalt des Pipettierkanals im Bereich der Pipettieröffnung kommt es daher nicht oder nicht besonders an.

Zur Erzielung einer möglichst definierten Gestalt des abgebenden Meniskus ist es weiter vorteilhaft, wenn die oben genannte Erzeugung des Unterdrucks eine Erzeugung eines ersten Unterdrucks, danach eine Erzeugung eines betragsmäßig höheren Drucks als den ersten Unterdruck und danach eine Erzeugung eines zweiten Unterdrucks umfasst. Bevorzugt ist der höhere Druck zwischen dem ersten und dem zweiten Unterdruck höher als der Haltebezugsdruck, sodass durch die beschriebene wechselnde Veränderung des Arbeitsgasdrucks die in der Pipettiervorrichtung bereitgestellte Dosierflüssigkeitsmenge längs eines Abschnitts des Pipettierkanals hin- und herbewegt werden kann. Dadurch kann wenigstens ein Abschnitt des Pipettierkanals mehrfach von Dosierflüssigkeit benetzt werden.

Dementsprechend kann das Verfahren gemäß einer vorteilhaften Weiterbildung der vorliegenden Erfindung nach dem Erzeugen des Unterdrucks, aber vor dem Erzeugen des Überdruckimpulses folgenden weiteren Schritt umfassen:
- Erhöhen des Drucks im Arbeitsgas und dadurch Bewegen der aufgenommenen Dosierflüssigkeit zu der Pipettieröffnung hin.

Ebenso kann das das Verfahren nach dem Erhöhen des Drucks im Arbeitsgas, aber vor dem Erzeugen des Überdruckimpulses folgenden weiteren Schritt umfassen:
- Erzeugen eines zweiten Unterdrucks im Arbeitsgas und dadurch Bewegen der aufgenommenen Dosierflüssigkeit von der Pipettieröffnung weg, unter Bildung oder Vergrößerung eines Gasvolumens zwischen der Dosierflüssigkeit und der Pipettieröffnung.

Durch Erzeugen des oben beschriebenen zweiten Unterdrucks ist sichergestellt, dass der abgebende pipettieröffnungsnähere Meniskus mit Abstand von der Pipettieröffnung im Inneren der Pipettiervorrichtung angeordnet ist, wenn der Überdruckimpuls erzeugt wird.

Der zweite Unterdruck muss nicht notwendigerweise erzeugt werden, jedoch ist dies zur Sicherstellung einer gewünschten Lage des abgebenden Meniskus mit Abstand von der Pipettieröffnung vorteilhaft. Es kann jedoch auch ausreichen, den ersten Unterdruck als einzigen Unterdruck länger zu erzeugen als den darauffolgenden erhöhten Druck oder/und diesen mit betragsmäßig größerem Abstand vom Haltebezugsdruck zu erzeugen als den darauffolgenden erhöhten Druck. Auch so kann sichergestellt werden, dass am Ende der vorbereitenden Druckmanipulation des Arbeitsgases vor Erzeugen des impulsartig dispensierenden Überdruckimpulses der abgebende Meniskus mit Abstand von der Pipettieröffnung im Inneren der Pipettiervorrichtung gelegen ist.

Auch wenn unmittelbar nach Erzeugung des ersten Unterdrucks, nach Erzeugung des höheren Drucks oder nach Erzeugung des zweiten Unterdrucks der impulsartig dispensierende Überdruckimpuls erzeugt werden kann, kann es jedoch von Vorteil sein, die in der Pipettiervorrichtung bereitgestellte Dosierflüssigkeitsmenge vor einer impulsartigen Dispensation zunächst zur Ruhe kommen zu lassen. Daher kann die Steuervorrichtung der erfindungsgemäßen Pipettiervorrichtung dazu ausgebildet sein, die Druckveränderungsvorrichtung nach der Erzeugung des Unterdrucks und vor der Erzeugung des Überdruckimpulses zur Erzeugung des Haltebezugsdrucks anzusteuern. Für das erfindungsgemäße Verfahren gilt eine entsprechende Weiterbildung.

Da der Druck des Arbeitsgases in der Regel die Gewichtskraft der in der Pipettiervorrichtung bereitgestellten Dosierflüssigkeitsmenge kompensieren muss, gegebenenfalls abzüglich von Reibungs- oder/und Kapillareffekten an den benetzten Pipettierkanalwänden, ist es gerade beim Aliquotieren, bei welchem die in der Pipettiervorrichtung bereitgestellte Dosierflüssigkeitsmenge mit jedem impulsartigen Dispensationsvorgang abnimmt, für eine möglichst genaue Positionierung des abgebenden Meniskus in der Pipettiervorrichtung vorteilhaft, wenn die Pipettiervorrichtung einen Drucksensor zur Erfassung des Drucks des Arbeitsgases aufweist, wobei der Drucksensor zur Übertragung seiner Erfassungsinformation signalübertragungsmäßig mit der Steuervorrichtung verbunden ist, wobei die Steuervorrichtung die Druckveränderungsvorrichtung nach Maßgabe der Erfassungsinformation des Drucksensors ansteuert.

Daher kann das Verfahren gemäß einer entsprechenden Weiterbildung eine Erfassung des Drucks des Arbeitsgases umfassen, wobei wenigstens eine Erzeugung eines Drucks aus Unterdruck, erhöhtem Druck, Haltebezugsdruck, und Überdruckimpuls sowie gegebenenfalls eines anschließenden Unterdruckimpulses in Abhängigkeit von dem erfassten Druck des Arbeitsgases oder/und in Abhängigkeit von einer angenommenen bereitgestellten Dosierflüssigkeitsmenge erfolgt. Die angenommene bereitgestellte Dosierflüssigkeitsmenge kann beispielsweise ausgehend von einer bekannten anfänglichen Dosierflüssigkeitsmenge durch Subtraktion eines mit der Anzahl von seit Bereitstellung der anfänglichen Dosierflüssigkeitsmenge erfolgten impulsartigen Dispensationsvorgängen multiplizierten Dosismenge eines einzelnen impulsartigen Dispensationsvorgangs bestimmt werden, beispielsweise durch die Steuervorrichtung.

Grundsätzlich kann die Pipettiervorrichtung einen fest installierten Pipettierkanal mit einer Pipettieröffnung aufweisen, durch welche hindurch die in der Pipettiervorrichtung bereitgestellte Dosierflüssigkeit dispensiert wird. Dies ist jedoch aus hygienischen Erwägungen weniger vorteilhaft. Bevorzugt ist die Pipettiervorrichtung dazu ausgebildet, wechselbare Pipettierspitzen als Teil des Pipettierkanals aufzunehmen. Dementsprechend ist gemäß einer vorteilhaften Weiterbildung der vorliegenden Erfindung vorgesehen, dass die Pipettiervorrichtung eine vom Pipettierkanal durchsetzte Kopplungsformation zur vorübergehenden Ankopplung einer Pipettierspitze aufweist. Ist eine Pipettierspitze an die Kopplungsformation angekoppelt, verlängert die Pipettierspitze den vorrichtungseigenen Pipettierkanal und ist vorübergehend, also während der Dauer ihrer Ankopplung, Teil des Pipettierkanals der Pipettiervorrichtung. Die Pipettierspitze ist vorzugsweise ein sogenanntes "disposable", also eine Einweg- bzw. Wegwerf-Pipettierspitze, welche nach einmaligem Dispensieren oder Aliquotieren entsorgt wird.

Bevorzugt ist die Pipettiervorrichtung nicht nur zur impulsartigen Dispensation ausgebildet, sondern auch zur herkömmlichen Aspiration, sodass die Bereitstellung von Dosierflüssigkeit in der Pipettiervorrichtung, insbesondere in einer daran aufgenommenen Pipettierspitze durch quasi-synchrone Aspiration von Dosierflüssigkeit durch die Pipettieröffnung der Pipettiervorrichtung hindurch in einen Aufnahmeraum der Pipettiervorrichtung erfolgen kann. Bevorzugt ist die Pipettiervorrichtung sowohl zur impulsartigen Dispensation im asynchronen Betrieb wie auch zur herkömmlichen Dispensation im quasi-synchronen Betrieb ausgebildet, so dass mit der erfindungsgemäßen Pipettiervorrichtung kleine Dosierflüssigkeitsmengen von weniger als 1 µl, etwa bis hinab zu einigen zehn Nanolitern, ebenso wie große Flüssigkeitsmengen von mehreren hundert Mikrolitern wiederholgenau dispensierbar sind. Die Umstellung zwischen asynchronem und quasi-synchronem Betrieb erfolgt sehr einfach mittels Einstellung der Pipettierkolbengeschwindigkeit durch die Steuervorrichtung. Bei ausreichend langsamer Kolbenbeschleunigung und Kolbenbewegung erfolgt die Dispensation, wie auch die Aspiration, quasi-synchron. Die einzustellenden Werte für Kolbenbeschleunigung oder/und Kolbengeschwindigkeit können ohne großen Aufwand für unterschiedliche Flüssigkeitsklassen durch Versuche ermittelt werden.

Beispielsweise kann die Steuereinrichtung zur Realisierung eines quasi-synchronen Pipettierbetriebs dazu ausgebildet sein, den Kolben zur Pipettierung eines vorbestimmten Einzel-Dosiervolumens von mehr als 1 µl mit einer Spitzengeschwindigkeit von nicht mehr als 1000 µl/s zu bewegen. Bei der angegebenen maximalen Geschwindigkeit des Kolbens von nicht mehr als 1000 µl/s folgt die Dosierflüssigkeit - gegebenenfalls mit geringem zeitlichen Versatz - in gleichgerichteter Bewegung dem Kolben. Das vom Kolben überstrichene Pipettiervolumen entspricht im Wesentlichen dem tatsächlich pipettierten Dosierflüssigkeitsvolumen. Wiederum gelten bevorzugt die oben genannten Kolbengrößen, angegeben durch die Kolbenfläche.

Mit der Möglichkeit, die erfindungsgemäße Pipettiervorrichtung sowohl im synchronen bzw. quasi-synchronen wie auch im asynchronen Pipettierbetrieb zu betreiben, kann ein und dieselbe erfindungsgemäße Pipettiervorrichtung dazu ausgebildet sein, ein auswählbares Einzel-Dosiervolumen in einem Dosiervolumenbereich von 100 nl bis 100 µl, vorzugsweise von 100 nl bis 1000 µl mit einer Volumenabweichung von nicht mehr als 2 % bezogen auf das vorbestimmte Einzel-Dosiervolumen als Nenn-Volumen reproduzierbar zu pipettieren. Somit ist die erfindungsgemäße Pipettiervorrichtung in der Lage, als maximales Pipettiervolumen das 10000-fache des minimalen Pipettiervolumens zu pipettieren. Dabei soll selbstverständlich nicht ausgeschlossen sein, dass beispielsweise die genannte Untergrenze von 100 nl noch unterschritten werden kann. Für die genannten Pipettiervolumen-Bereiche ist die Funktionalität der Pipettiervorrichtung jedenfalls gewährleistet.

Aus den genannten Gründen ist es vorteilhaft, wenn die Pipettiervorrichtung eine Pipettierspitze aufweist, mit einer Kopplungsgegenformation zum lösbaren Kopplungseingriff mit der Kopplungsformation und mit einer Pipettieröffnung als Durchlassöffnung für Dosierflüssigkeit während eines Aspirationsvorgangs und während eines Dispensationsvorgangs. In diesem Falle ist die Dosierflüssigkeit, gegebenenfalls nach einem Aspirationsvorgang, in der Pipettierspitze bereitgestellt. Der Aspirationsvorgang erfolgt nicht impulsartig, sondern als quasi-synchroner Aspirationsvorgang, d. h. die Erzeugung eines aspirierenden Unterdrucks im Arbeitsgas und ein dadurch bedingtes Einströmen von Dosierflüssigkeit durch die Pipettieröffnung hindurch in die Pipettiervorrichtung bzw. in die Pipettierspitze überlappen sich größtenteils zeitlich.

Einer der großen Vorteile der erfindungsgemäßen Pipettiervorrichtung ebenso wie des erfindungsgemäßen Dispensationsverfahrens liegt darin, dass eine standardmäßige Pipettierspitze verwendet werden kann mit einem Nenn-Pipettierraumvolumen, welches wesentlich größer ist als die bei einem einzigen impulsartigen Dispensationsvorgang abgegebene Dosierflüssigkeitsdosis. Bevorzugt ist das Nenn-Aufnahmevolumen bzw. Nenn-Pipettierraumvolumen der Pipettierspitze mehr als 80 mal, besonders bevorzugt mehr als 300 mal, höchst bevorzugt mehr als 500 mal so groß wie das minimal mögliche Volumen einer einzigen impulsartig dispensierten oder dispensierbaren Flüssigkeitsdosis. Dadurch können Aliquotiervorgänge mit zahlreichen aufeinanderfolgenden impulsartigen Dispensationen bei gleichzeitig sehr hoher Wiederholgenauigkeit des Dosisvolumens realisiert werden.

Beispielsweise wurde in einem Versuch eine Standard-Pipettierspitze mit einem Nenn-Aufnahmevolumen von 300 µl an eine Pipettiervorrichtung vorübergehend angekoppelt. In diese Pipettierspitze wurden 40 µl einer Dosierflüssigkeit aspiriert, beispielsweise Glycerin. Durch die erfindungsgemäße Ausbildung der Pipettiervorrichtung bzw. durch Anwendung des erfindungsgemäßen Verfahrens wurde zwischen dem abgebenden Meniskus und der Pipettieröffnung ein Gasvolumen von 4 bis 5 µl vorgesehen. In dieser Konstellation wurde Glycerin als Dosierflüssigkeit mit einem Einzel-Dosiervolumen von 448 nl 20 mal hintereinander aliquotiert, wobei sich die einzelnen abgegebenen Dosiervolumina um nicht mehr als 2,96 % unterschieden.

Die mehrfache Abgabe von Glycerin als vergleichsweise hochviskose Flüssigkeit mit einem reproduzierbaren Dosiervolumen von weniger als 450 nl aus einem in der Pipettiervorrichtung bereitgestellten Reservoir von 40 µl ist in höchstem Maße ungewöhnlich.

Diese Genauigkeit wurde maßgeblich durch das vor Erzeugung des Überdruckimpulses zwischen dem abgebenden Meniskus der Dosierflüssigkeit und der Pipettieröffnung bereitgestellte Gasvolumen erzielt, denn Versuche ohne Gasvolumen, also mit direkt an der Pipettieröffnung anliegendem abgebendem Meniskus ließen keine wiederholgenaue impulsartige Dispensation von Glycerin mit weniger als 450 nl zu. Ohne Gasvolumen zwischen Pipettieröffnung und abgebendem Meniskus lag das minimale reproduzierbare Dispensationsvolumen von Glycerin eher in der Größenordnung von 2 µl, also bei mehr als dem Vierfachen des mit Gasvolumen erreichten Werts. Die bisher durchgeführten Versuche deuten an, dass gerade bei höher viskosen Dosierflüssigkeiten, wie Glycerin und dergleichen, durch Anwendung der vorliegenden Erfindung erhebliche Fortschritte bei der Erzielung wiederholgenauer kleiner Dosiermengen beim Aliquotieren aus einem größeren Vorrat in der Pipettiervorrichtung erzielbar sind.

Das Gasvolumen zwischen Pipettieröffnung und abgebendem Meniskus beträgt bevorzugt wenigstens etwa das Zwei- bis Vierfache des impulsartig zu dispensieren beabsichtigten Dosierflüssigkeitsvolumens. Das Gasvolumen sollte andererseits nach Möglichkeit nicht größer sein als das 25-fache, bevorzugt nicht größer als das 20-fache des für ein impulsartiges Dispensieren vorgesehenen Dosierflüssigkeitsvolumens.

Gerade bei sich konisch zur Pipettieröffnung hin verjüngenden Pipettierkanälen und Pipettierspitzen führt ein zunehmender Abstand des abgebenden Meniskus von der Pipettieröffnung zu einer immer größer werdenden Fläche desselben. Ein Grenzfall der Oberflächenvergrößerung des pipettieröffnungsnäheren Meniskus tritt dann ein, wenn durch den unteren Meniskus Gasblasen in die im Pipettierkanal bereitgestellte Dosierflüssigkeit eintreten. Dieser Fall sollte selbstverständlich vermieden werden.

Konstruktiv ist die Verwendung herkömmlich großer Pipettierspitzen mit einem Nenn-Aufnahmevolumen von 100, 200, 300 oder mehr Mikrolitern dadurch möglich, dass die Druckveränderungsvorrichtung einen magnetischen Kolben und mit diesem zu dessen Bewegung längs des Pipettierkanals zusammenwirkende elektrisch bestrombare Spulen aufweisen kann. Der magnetische Kolben ist bevorzugt ein Festkörperkolben mit wenigstens einem oder bevorzugt einer Mehrzahl von Festkörper-Permanentmagneten, welche bevorzugt an ihrem Längsende gegenüber dem den Kolben beweglich aufnehmenden Pipettierkanal ausreichend abgedichtet sind, beispielsweise durch entsprechende Kappen. Die Bereitstellung eines durch ein elektromagnetisches Feld antreibbaren magnetischen Kolbens ermöglicht hochdynamische Bewegungsvorgänge des Kolbens im Pipettierkanal und dadurch die Erzeugung zeitlich kurzer peitschenhiebartiger Überdruckimpulse, welche durch ebenso zeitlich kurze Unterdruckimpulse in ihrer Wirkung schlagartig gestoppt werden können.

Mit magnetischen Kolben können Kolbenbeschleunigungen im Pipettierkanal erzielt werden, welche mit herkömmlichen mechanischen Bewegungsantrieben von Pipettierkolben nicht erreichbar sind.

Dann, wenn die Druckveränderungsvorrichtung, wie es bevorzugt ist, einen magnetischen Pipettierkolben und elektrisch bestrombare Spulen umfasst, ist die Steuervorrichtung bevorzugt dazu ausgebildet, die Bestromung der Spulen zu steuern. Die oben genannte Erzeugung eines Unterdrucks umfasst dann eine Verlagerung des magnetischen Kolbens in eine erste Richtung, in der Regel in eine Richtung weg von der in der Pipettiervorrichtung bereitgestellten Dosierflüssigkeitsmenge.

Ebenso umfasst die Erzeugung des Überdruckimpulses eine Verlagerung des Kolbens in eine der ersten entgegengesetzte zweite Richtung und unmittelbar anschließend in die erste Richtung.

Bevorzugt befindet sich zwischen dem Pipettierkolben und der im Pipettierkanal bereitgestellten Dosierflüssigkeitsmenge nur das Arbeitsgas und kein weiteres Systemfluid oder Dosierfluid.

Alternativ oder zusätzlich kann die Druckveränderungsvorrichtung jedoch auch durch unterschiedliche Arbeitsgas-Druckreservoirs realisiert sein, von welchen jedes über wenigstens ein Ventil mit dem Pipettierkanal druckübertragend verbindbar ist. Dabei ist ein Arbeitsgas-Druckreservoir ein Überdruck-Reservoir und das jeweils andere ist ein Unterdruck-Reservoir. Die Drücke: Überdruck und Unterdruck, sind bezogen auf einen Bezugsdruck zu verstehen, etwa einen Druck in einem zu erwartenden Haltebezugsdruckbereich, welcher durch die üblicherweise im Pipettierkanal bereitgestellte Dosierflüssigkeitsmenge bestimmt ist.

In dem letztgenannten Anwendungsfall ist die Steuervorrichtung dann dazu ausgebildet, ein Öffnen und Schließen der jeweiligen Ventile zu steuern, wobei die Erzeugung eines Unterdrucks ein Öffnen und ein Schließen des Unterdruckventils umfasst, und wobei die Erzeugung eines Überdruckimpuls ein Öffnen und ein Schließen des Unterdruckventils sowie ein Öffnen und ein Schließen des Überdruckventils umfasst.

Bei der bevorzugten Verwendung einer Druckveränderungsvorrichtung mit Pipettierkolben wird die peitschenartige Bewegbarkeit des Kolbens bevorzugt dadurch realisiert, dass die Steuereinrichtung dazu ausgebildet ist, zur Dispensation eines vorbestimmten Einzel-Dosiervolumens von weniger als 1 µl den Bewegungsantrieb derart zu betreiben, dass der Kolben in Dispensationsrichtung bewegt wird und dabei seine dosierseitige Endfläche ein Dispensationsvolumen überstreicht, welches um nicht weniger als das 1,4-fache größer als das Einzel-Dosiervolumen ist, und dass der Kolben anschließend in einer der Dispensationsrichtung entgegengesetzten Aspirationsrichtung bewegt wird und dabei seine dosierseitige Endfläche ein Aspirationsvolumen überstreicht, wobei zwischen dem Beginn des Steuersignals der Steuereinrichtung zum Antrieb des Kolbens in Dispensationsrichtung und dem Ende des Steuersignals zum Antrieb des Kolbens in Aspirationsrichtung nicht mehr als 40 ms, vorzugsweise nicht mehr als 30 ms verstreichen.

Dieser Aspekt stellt auf das die Kolbenbewegung steuernde Steuersignal ab, dem der Kolben aufgrund von Massenträgheit, Reibung und dergleichen äußeren Einflüssen in der Regel mit zeitlichem Versatz und mit einer gewissen Abweichung der Kolben-Istbewegung von der durch das Steuersignal vorgegebenen Soll-Bewegung folgt. Die Ansteuerung eines der Soll-Bewegung ausreichend genau folgenden Kolbens führt bereits zu dem nachfolgend ausführlich beschriebenen erfindungsgemäßen Erfolg und realisiert die mit der vorliegenden Erfindung angestrebten Wirkungen.

Abgestellt auf die tatsächliche Kolbenbewegung kann eine peitschenartige Bewegung des Kolbens dadurch realisiert werden, dass die Steuereinrichtung dazu ausgebildet ist, zur Pipettierung eines vorbestimmten Einzel-Dosiervolumens von weniger als 1 µl den Bewegungsantrieb derart zu betreiben, dass der Kolben ausgehend von einer Startstellung in Dispensationsrichtung bewegt wird und dabei seine dosierseitige Endfläche ein Dispensationsvolumen überstreicht, welches um nicht weniger als das 1,4-fache größer als das Einzel-Dosiervolumen ist, und dass der Kolben anschließend ausgehend von einem Bewegungsrichtungs-Umkehrort in einer der Dispensationsrichtung entgegengesetzten Aspirationsrichtung bewegt wird und dabei seine dosierseitige Endfläche ein Aspirationsvolumen überstreicht, wobei zwischen den Zeitpunkten, in welchen der Kolben in Dispensationsrichtung und in Aspirationsrichtung jeweils den Ort erreicht, welcher dem halben Weg zwischen Kolben-Startstellung und Kolben-Umkehrort entspricht, nicht mehr als 40 ms, vorzugsweise nicht mehr als 30 ms verstreichen ("Halbwegszeit" bzw. "Halbwegsweite").

Der zweite Aspekt der Halbwegsweite ist vom ersten Apsekt der in vorbestimmter Zeit verwendeten Steuersignals zur Ansteuerung des Kolbens grundsätzlich unabhängig. Der erste und der zweite Aspekt können auch gemeinsam in Kombination an einer Pipettiervorrichtung realisiert sein.

Die Heranziehung der Zeit, die der Kolben benötigt, um ausgehend vom Ort der "Halbwegsweite", also vom Mittelpunkt der Strecke zwischen Kolben-Startstellung und dem Totpunkt mit Bewegungsrichtungsumkehr von der Dispensationsrichtung in die Aspirationsrichtung (Bewegungsrichtungs-Umkehrort), zum Totpunkt und zurück zum Ort der Halbwegsweite zu gelangen, sorgt für eine Ausblendung von für den Dispensationsvorgang irrelevanten Abweichungen der Kolben-Istbewegung von der Kolben-Sollbewegung, die etwa gegen Ende der Kolbenbewegung bei der Rückkehr in eine Stillstandsposition in Form von Überschwingen auftreten können. Das etwaig auftretende Überschwingen kann die Feststellung des tatsächlichen Kolbenstillstands am Ende eines impulsartigen Dispensationsvorgangs erschweren. Da das Überschwingen jedoch gemäß den bisher durchgeführten Versuchen keinerlei Einfluss auf die Menge an dispensierter Dosierflüssigkeit hat, kann eine vertiefte Diskussion des Bewegungsverhaltens des Kolbens am Bewegungsende unterbleiben. Entscheidend für den durch die peitschenartige Kolbenbewegung erzielten Dispensationserfolg ist eben die oben genannte Zeitspanne, die der Kolben benötigt, um während seiner Bewegung in Dispensationsrichtung ausgehend von dem Ort der Halbwegsweite zum Totpunkt seiner Bewegung und anschließend während seiner Bewegung in Aspirationsrichtung wieder den Ort der Halbwegsweite zu erreichen.

Die Bewegung des Kolbens kann anhand eines beliebigen Bezugspunktes am Kolben erfasst werden, etwa anhand der dosierseitigen Kolbenfläche.

Die Wirkung des erfindungsgemäß vorgeschlagenen Bewegungsablaufs des Kolbens auf die Dosierflüssigkeit ist noch nicht vollständig geklärt. Ein Erklärungsmodell geht jedoch davon aus, dass mit der Bewegung des Kolbens in Pipettierrichtung um mehr als das zu pipettierende vorbestimmte Einzel-Dosiervolumen die Anregungs- oder Losbrech-Energie auf die zu pipettierende Dosierflüssigkeit übertragen wird, die notwendig ist, um gegen Trägheitskräfte, Oberflächenspannung, Adhäsion und Kohäsion der Dosierflüssigkeit deren Bewegung in die gewünschte Dispensationsrichtung einzuleiten.

Mit der Bewegung des Kolbens in die der Dispensationsrichtung entgegengesetzten Aspirationsrichtung, bei welcher der Kolben wiederum in der Regel ein anderes, vorzugsweise größeres Volumen als das eigentlich zu pipettierende Einzel-Dosiervolumen überstreicht, wird die zuvor angeregte Dispensationsbewegung der Dosierflüssigkeit wieder "entregt".

Es wird somit ein sehr kurzer, scharfer Druckimpuls vom Kolben über das Arbeitsgas auf die Dosierflüssigkeit übertragen.

Überraschenderweise können die vom Kolben bei seiner Bewegung überstrichenen Volumina: Dispensationsvolumen und Aspirationsvolumen, gleich groß sein. Der Kolben kann sich daher am Ende des Dispensationsvorgangs wieder in der Startstellung befinden. Trotzdem wird ein Einzel-Dosiervolumen pipettiert.

Es kommt gemäß der vorliegenden Erfindung daher nicht auf ein "Verlagerungssaldo" des Kolbens an. Versuche haben vielmehr gezeigt, dass das tatsächlich dispensierte Dosierflüssigkeitsvolumen von der nach der Zeit integrierten Kolben-Soll-bewegung abhängt. Die Kolben-Sollbewegung kann etwa in Form von Soll-Orten des Kolbens längs der Kanalbahn zu jeweiligen Soll-Zeitpunkten, also durch Soll-Ort-Zeit-Kurven, angegeben werden. Da die Kolben-Sollbewegung vom Steuersignal der Steuereinrichtung abhängt, kann das tatsächlich pipettierte Dosierflüssigkeitsvolumen von dem nach der Zeit integrierten zeitabhängigen Verlauf des Steuersignals abhängen. Ebenso kann das tatsächlich pipettierte Dosierflüssigkeitsvolumen von der nach der Zeit integrierten Kolben-Istbewegung abhängen. Wiederum kann die Kolben-Istbewegung in Form von Ist-Orten des Kolbens längs der Kanalbahn zu jeweiligen Ist-Zeitpunkten, also in Form von Ist-Ort-Zeit-Kurven, angegeben werden. Die Integrationsgrenzen bei Verwendung der Kolben-Istbewegung sind die beiden Durchgänge des Kolbens durch den Ort der Halbwegsweite.

Trägt man also eine der genannten zeitlich sich ändernden Größen: Kolben-Soll-bewegung, Steuersignal, Kolben-Istbewegung, als Graph nach der Zeit auf, ist die zwischen Bewegungsbeginn und Bewegungsende unter dem Graphen liegende Fläche ein Maß für das tatsächlich dispensierte Dosierflüssigkeitsvolumen. Bei Heranziehung der Kolben-Istbewegung als Bewertungsgröße für das dispensierte Dosierflüssigkeitsvolumen ist der relevante Bewegungsbeginn der erste Durchgang durch den Ort der Halbwegsweite und ist das relevante Bewegungsende der zweite Durchgang durch diesen Ort.

Das vom Kolben, bzw. von seiner dosierseitigen Endfläche, überstrichene Volumen ist dabei unter der vernünftigen Voraussetzung, dass sich die Gestalt der Endfläche während des Pipettierens nicht ändert, der Flächeninhalt der Projektion der dosierseitigen Endfläche auf eine zur Kanalbahn orthogonale Projektionsebene multipliziert mit dem Kolbenhub. Da bevorzugt wenigstens die dosierseitige Endfläche des Kolbens als Festkörper ausgebildet ist, ist diese Annahme realistisch.

Mit "Dispensationsrichtung" ist eine Bewegungsrichtung des Kolbens bezeichnet, welche ein Ausschieben von Dosierflüssigkeit aus einem Dosierflüssigkeits-Aufnahmeraum der Pipettiervorrichtung, etwa aus einer Pipettierspitze, bewirkt. Mit "Aspirationsrichtung" ist eine Bewegungsrichtung des Kolbens bezeichnet, welche ein Einsaugen von Dosierflüssigkeit in einen Dosierflüssigkeits-Aufnahmeraum der Pipettiervorrichtung bewirkt.

Ein Einzel-Dosiervolumen ist im Sinne der vorliegenden Anmeldung immer dann vorbestimmt, wenn der Dispensationsvorgang mit dem Ziel ein konkretes bekanntes Dosiervolumen zu dispensieren, abläuft. Das Einzel-Dosiervolumen kann durch manuelle Eingabe an der Pipettiervorrichtung oder durch Datenübertragung an die Pipettiervorrichtung oder durch Berechnung aus manuell eingegebenen oder/und aus in einer Speichervorrichtung hinterlegten Daten für die Pipettiervorrichtung vorbestimmt sein.

Das von der dosierseitigen Endfläche des Kolbens zunächst überstrichene Dispensationsvolumen kann nicht nur von dem vorbestimmten Einzel-Dosiervolumen, sondern zusätzlich von Parametern der jeweils zu pipettierenden Dosierflüssigkeit oder/und von dem Volumen des Arbeitsgases zwischen dosierseitiger Kolbenfläche und Dosierflüssigkeit abhängen. Grundsätzlich gilt: je größer die Viskosität der Dosierflüssigkeit (gemessen bei Raumtemperatur von 20 °C bei einem Atmosphärendruck von 1013,25 hPa mittels eines Rotationsviskosimeters) ist, desto größer ist das Verhältnis von Dispensationsvolumen zu Einzeldosiervolumen. Ebenso gilt: je größer das Volumen des Arbeitsgases ist, desto größer ist das Verhältnis von Dispensationsvolumen zu Einzeldosiervolumen. Bei den bevorzugten wechselbaren Pipettierspitzen kann üblicherweise ein bauartbedingtes Arbeitsgasvolumen zwischen Kolben und Dosiervolumen von 100 µl nicht unterschritten und von 3000 µl nicht überschritten werden. Bevorzugt liegt das Arbeitsgasvolumen zwischen 180 µl und 1000 µl, besonders bevorzugt zwischen 200 µl und 800 µl.

So kann beispielsweise das Dispensationsvolumen nicht weniger als das 1,5-fache des Einzeldosiervolumens betragen. Es kann jedoch auch deutlich größer als das Einzel-Dosiervolumen sein. So kann es beispielsweise das Fünffache des Einzel-Dosiervolumens betragen, wenn eine niedrige Anregungsenergie ausreicht, die Dosierflüssigkeit zum Fließen durch die in der Regel enge Pipettieröffnung zu beschleunigen. Weniger gut zur Bewegung anregbare Dosierflüssigkeiten können mit einer Kolbenbewegung in Dispensationsrichtung und einem dabei von der dosierseitigen Endfläche überstrichenen Dispensationsvolumen von nicht weniger als dem Zehnfachen des Einzel-Dosiervolumens zur Bewegung angeregt werden. Da die Kolbenbewegung bevorzugt mit hoher Volumengeschwindigkeit als dem pro Zeiteinheit von der dosierseitigen Endfläche überstrichenen Volumen ausgeführt wird, steigt mit zunehmendem Dispensationsvolumen die Wiederholgenauigkeit der Pipettierung sehr kleiner Einzel-Dosiervolumina von weniger als 1 µl. Daher kann das Dispensationsvolumen bevorzugt nicht weniger als das Fünfundzwanzigfache des Einzel-Dosiervolumens betragen.

Versuche haben gezeigt, dass besonders für die häufig zu pipettierende Klasse von wässrigen Flüssigkeiten - das sind im Sinne der vorliegenden Anmeldung Flüssigkeiten mit einer Viskosität im Bereich von 0,8 bis 10 mPas, gemessen bei Raumtemperatur von 20 °C bei einem Atmosphärendruck von 1013,25 hPa mittels eines Rotationsviskosimeters - ein Dispensationsvolumen von zwischen dem Zehnfachen und dem Sechzigfachen, bevorzugt von zwischen dem Zehnfachen und dem Fünfundzwanzigfachen, des Einzel-Dosiervolumens zu hervorragenden Dosierergebnissen führt. Ein Dispensationsvolumen von zwischen dem Zehnfachen und dem Fünfundzwanzigfachen des Einzel-Dosiervolumens liefert auch für Dosierflüssigkeiten außerhalb des oben genannten Viskositätsbereichs hervorragende Dosierergebnisse.

Eine Obergrenze des Dispensationsvolumen stellt ein Dispensationsvolumen dar, bei welchem aufgrund der großen Zeitdauer die der Kolben benötigt, um mit seiner dosierseitigen Endfläche das Dispensationsvolumen zu überstreichen, mehr als das Einzel-Dosiervolumens durch die Pipettieröffnung hindurch bewegt wird. Tests haben gezeigt, dass Dispensationsvolumina mit mehr als dem 100-fachen kein sinnvolles Dispensieren mehr von Dosiervolumina mit weniger als 1 µl gestatten.

Es sei an dieser Stelle klargestellt, dass die erfindungsgemäß ausgebildete Pipettiervorrichtung trotz der zuvor beschriebenen großen Kolbenbewegung beim Dispensieren nur das vorbestimmte Einzel-Dosiervolumens an Dosierflüssigkeit durch ihre Pipettieröffnung hindurch bewegt. Es findet keine Überdosierung bzw. Überdispensation mit anschließender Korrektur in Aspirationsrichtung statt. Dosierflüssigkeit wird während eines Dispensationsvorgangs erfindungsgemäß nur in die gewünschte Dispensationsrichtung bewegt. Ein Dispensationsvorgangim Sinne der vorliegenden Anmeldung ist abgeschlossen, wenn die Kolbenbewegung in Aspirationsrichtung endet.

Das vom Kolben während seiner Bewegung überstrichene Aspirationsvolumen kann gleich dem Dispensationsvolumen sein, sogar beim Aliquotieren. Allerdings kann dann mit zunehmender Anzahl von Dispensationsvorgängen im Aliquotierbetrieb der pipettieröffnungsnähere Meniskus immer weiter in einen Dosierflüssigkeits-aufnahmeraum der Pipettiervorrichtung wandern, was die Genauigkeit weiterer Dispensationsvorgänge beeinträchtigen kann.

Daher kann das Aspirationsvolumen um das Einzel-Dosiervolumen kleiner sein als das Dispensationsvolumen. Somit kann sichergestellt werden, dass der pipettieröffnungsnähere Meniskus der aufgenommenen Dosierflüssigkeit trotz mehrerer durchgeführter Dispensationsvorgänge in einem möglichst konstanten Ort verbleibt. Auch das Aspirationsvolumen kann somit gemäß der zuvor gemachten Angaben wesentlich größer als das Einzel-Dosiervolumen sein.

Es kann jedoch auch zunächst der Kolben gegen Ende der Erzeugung des Überdruckimpulses in Aspirationsrichtung in seine Kolben-Startstellung zu Beginn des Dispensationsvorgangs zurückverstellt werden und dann wieder in Dispensationsrichtung um das Einzel-Dosiervolumen nachgeführt werden. Die Nachführbewegung kann dann erheblich langsamer ablaufen als die Kolbenbewegung während des impulsartigen Dispensationsvorgangs und zählt nicht mehr zum Dispensationsvorgang selbst.

Das für einen Dispensationsvorgang zur Dispensation kleiner Dosierflüssigkeitsmengen korrekte vom Kolben zu überstreichende Dispensations- und Aspirationsvolumen kann bei vorgegebenem Einzel-Dosiervolumen einfach durch Versuche ermittelt werden.

Somit wird gemäß vorliegender Erfindung im Gegensatz zu dem zuvor im Zusammenhang mit dem Stand der Technik beschriebenen quasi-synchronen Pipettierbetrieb ein asynchroner Pipettierbetrieb genutzt, bei welchem ein signifikanter Abschnitt der Kolbenbewegung nicht mit der Bewegung der Dosierflüssigkeit korreliert. Während es bei dem zuvor beschriebenen quasi-synchronen Pipettierbetrieb lediglich einen geringen zeitlichen Versatz zwischen gleichsinnigen Bewegungen von Kolben und Dosierflüssigkeit gibt, können bei dem vorliegend beschriebenen asynchronen Pipettierbetrieb in ein und demselben Zeitpunkt bzw. in ein und derselben Zeitspanne zueinander entgegengesetzt gerichtete Bewegungen von Kolben und Dosierflüssigkeit auftreten oder es kann eine Bewegung von Dosierflüssigkeit durch die Pipettieröffnung erst einsetzen, nachdem der Kolben seine Bewegung in Aspirationsrichtung abgeschlossen hat und wieder zum Stillstand gekommen ist.

Statt wie bisher durch verhältnismäßig langsame Kolbenbewegungen Dosierflüssigkeit einzusaugen oder/und abzugeben, wird bei der vorliegenden Pipettiervorrichtung durch die schnelle Kolbenbewegung ein Druckimpuls im kompressiblen Arbeitsgas erzeugt, der auf die inkompressible Dosierflüssigkeit übertragen wird und dort zur Absonderung kleiner Einzel-Dosiervolumina aus einer größeren Dosierflüssigkeitsmenge führen kann. Aufgrund der Kolbenbewegung in Dispensationsrichtung und in Aspirationsrichtung umfasst der genannte Druckimpuls verglichen mit der umgebenden Atmosphäre eine steigende Flanke und eine fallende Flanke. Bei der Aspiration geht üblicherweise die fallende Pulsflanke zeitlich der steigenden Pulsflanke voraus, während es bei der Dispensation genau umgekehrt ist.

Unabhängig davon, wann bei einem Dispensationsvorgang das Einzel-Dosiervolumen an Dosierflüssigkeit sich durch die Pipettieröffnung hindurchzubewegen beginnt, ist jedoch den meisten Dispensationsvorgängen gemein, dass bei der Dispensation der Kolben zur Bewegungsrichtungsumkehr angesteuert wird und in der Regel die Bewegungsrichtung des Kolbens tatsächlich umgekehrt wird, bevor sich das vorbestimmte Flüssigkeitsvolumen von der Pipettieröffnung abgelöst hat. Dadurch kann eine Dispensation eines vorbestimmten Einzel-Dosiervolumens von weniger als 1 µl im Jet-Modus realisiert werden.

Gemäß einer vorteilhaften Ausführungsform, die zur Dispensation von Einzel-Dosiervolumina von weniger als 1 µl im Jet-Modus ausgebildet ist, kann die die Steuereinrichtung dazu ausgebildet sein, den Bewegungsantrieb zur Bewegungsrichtungsumkehr des Kolbens von der Dispensationsrichtung in die Aspirationsrichtung anzusteuern, bevor sich das vorbestimmte Flüssigkeitsvolumen von der Pipettieröffnung abgelöst hat. Es wird dann das vorbestimmte Flüssigkeitsvolumen aus der Pipettieröffnung herausgeschleudert. Auch dies ist Ausdruck der peitschenartigen Kolbenbewegung.

Bei ausreichend schneller Kolbenbewegung kann es sogar vorkommen, dass die Kolbenbewegung in Dispensations- und in Aspirationsrichtung vollständig abgeschlossen ist, bevor sich das gewünschte Einzel-Dosiervolumen an Dosierflüssigkeit vollständig durch die Pipettieröffnung hindurchbewegt hat. Die Kolbengeschwindigkeit kann daher ebenfalls eine wichtige Einflussgröße sein.

Folglich kann die peitschenartige Bewegbarkeit des Kolbens bei einer erfindungsgemäßen Pipettiervorrichtung dadurch bewirkt werden, dass der Bewegungsantrieb einen Linearmotor umfasst und dass die Steuereinrichtung und der Bewegungsantrieb zur Pipettierung eines vorbestimmten Einzel-Dosiervolumens von weniger als 1 µl dazu ausgebildet sind, den Kolben mit einer Spitzengeschwindigkeit von wenigstens 5000 µl/s, bevorzugt von wenigstens 10000 µl/s, und von nicht mehr als 25000 µl/s zu bewegen.

Die Bewegungsgeschwindigkeit des Kolbens ist ebenfalls charakteristisch für eine peitschenartige Kolbenbewegung. Dabei ist die Volumengeschwindigkeit des Kolbens, also das von der dosierseitigen Endfläche des Kolbens pro Zeiteinheit überstrichene Volumen, von größerer Bedeutung als die lineare Bewegungsgeschwindigkeit des Kolbens oder einer Kolbenstange. Zwar reicht bei Kolben mit größerer Kolbenfläche ein geringerer Hub aus, um das gleiche Volumen zu überstreichen, für das ein Kolben mit geringerer Kolbenfläche einen größeren Hub benötigt. Somit könnte zur Realisierung zunehmender Volumengeschwindigkeiten einfach ein Kolben mit größerer Kolbenfläche längs der Kanalbahn bewegt werden als ein Kolben mit kleinerer Kolbenfläche. Allerdings steigt die für eine Bewegungseinleitung des Kolbens notwendige Losbrech-Kraft, etwa zur Überwindung der Haftreibung, mit der Kolbengröße erheblich an, sodass Kolben mit zunehmend großer Kolbenfläche für die Dispensation von Einzel-Dosiervolumina von weniger als 1 µl zunehmend schlechter steuerbar sind.

Die vorliegende Erfindung betrifft bevorzugt Pipettiervorrichtungen, deren Kolben eine Kolbenfläche von zwischen 3 und 80 mm² aufweisen, also welche bei kreisförmiger Kolbenfläche einen Durchmesser von zwischen 2 und etwa 10 mm aufweisen. Um mehrere Pipettierkanäle in einem zeilen- und spaltenförmigen Raster mit möglichst geringer Rasterweite anordnen zu können, betrifft die vorliegende Erfindung besonders bevorzugt Pipettiervorrichtungen, deren Kolben eine Kolbenfläche von zwischen 3 und 20 mm² aufweisen, was bei kreisförmiger Kolbenfläche einem Durchmesser von zwischen 2 und etwa 5 mm entspricht.

Beim Dispensieren mit zu hohen maximalen Kolbengeschwindigkeiten von beispielsweise mehr als 25000 µl/s kommt es zwar immer noch zu einer Flüssigkeitsbewegung aus einem Dosierflüssigkeits-Aufnahmeraum hinaus, jedoch wird dann das Einzel-Dosiervolumen in der Regel in mehrere Teilvolumina zersprengt oder zerstäubt abgegeben, was für hochgenaues Dispensieren der hier diskutierten kleinen Einzel-Dosiervolumina von weniger als 1 µl inakzeptabel ist. Grundsätzlich kann festgestellt werden, dass mit zunehmender Kolbengeschwindigkeit die Neigung steigt, die vorbestimmte Dosierflüssigkeitsmenge unerwünschterweise in mehreren Teilmengen zu pipettieren. Nach derzeitigem Kenntnisstand werden zumindest für wässrige Dosierflüssigkeiten, wie sie oben definiert sind, bei maximalen Kolbengeschwindigkeiten von etwa 10.000 µl/s hinsichtlich Genauigkeit und Wiederholbarkeit der pipettierten Flüssigkeitsmenge ganz hervorragende Ergebnisse erzielt.

Um einen Eindruck von der Kolbengeschwindigkeit zu geben: Bevorzugt benötigt der Kolben für seine Bewegung in Dispensationsrichtung und anschließend in Aspirationsrichtung von dem Ort der Halbwegsweite bis zum erneuten Erreichen dieser Halbwegsweite weniger als 30 ms, vorzugsweise weniger als 20 ms, höchst bevorzugt sogar weniger als 16 ms. Es sind sogar Bewegungszeiten im einstelligen Millisekundenbereich denkbar. Entsprechendes gilt für die Dauer des Steuersignals vom Beginn des den Kolben in Dispensationsrichtung antreibenden Steuersignals bis zum Ende des den Kolben in Aspirationsrichtung antreibenden Steuersignals. Für das Steuersignal sind Signaldauern von bis zu 1 ms möglich, um besonders kleine Einzel-Dosiervolumina zu pipettieren.

Eine vollständige Kolbenbewegung in Dispensations- und Aspirationsrichtung, mit welcher ein Einzel-Dosiervolumen von 950 nl einer wässrigen Dosierflüssigkeit bei einem von der dosierseitigen Endfläche überstrichenen Pipettiervolumen von 30 µl und einem überstrichenen Gegenpipettiervolumen von 29,05 µl bewirkt wird, kann mit einem Kolben mit kreisförmiger Kolbenfläche und einem Durchmesser von 4,3 mm problemlos in etwa 15 ms ablaufen.

Der kinematische Aspekt der peitschenartigen Kolbenbewegung beruht jedoch nicht nur auf der erzielbaren maximalen Kolbengeschwindigkeit, sondern auch auf der Zeitspanne, die der Bewegungsantrieb benötigt, den Kolben auf die gewünschte Kolbengeschwindigkeit zu beschleunigen oder/und ausgehend von der gewünschten Kolbengeschwindigkeit abzubremsen. Bevorzugt sind daher die Steuereinrichtung und der Bewegungsantrieb dazu ausgebildet, den Kolben mit einer Beschleunigung von wenigstens 2 x 10⁶ µl/s², bevorzugt von wenigstens 6 x 10⁶ µl/s² besonders bevorzugt sogar von wenigstens 8 x 10⁶ µl/s² und von nicht mehr als 5 x 10⁷ µl/s² zur Bewegung längs der Kanalbahn zu beschleunigen oder/und zu verzögern. Es gelten die oben gemachten Angaben zur bevorzugten Kolbengröße, angegeben als Kolbenfläche.

Völlig überraschend hat sich weiter gezeigt, dass das Pipettieren von Dosierflüssigkeiten, insbesondere von wässrigen Dosierflüssigkeiten, mit den hier vorgeschlagenen erfindungsgemäßen Pipettiervorrichtungen unabhängig von der jeweils verwendeten Pipettierspitze ist. Mit gleichen Pipettierparametern wird für ein und dieselbe Dosierflüssigkeit an ein und derselben Pipettiervorrichtung mit unterschiedlichen Pipettierspitzen stets das gleiche Pipettierergebnis wiederholbar erzielt. Insbesondere ist das Pipettierergebnis unabhängig von dem Nenn-Pipettierraumvolumen der jeweils an die Pipettiervorrichtung angekoppelten Pipettierspitze.

Die vorliegende Erfindung wird nachfolgend anhand der beiliegenden Zeichnungen näher erläutert werden. Es stellt dar:
- Figur 1: eine erfindungsgemäße Pipettiervorrichtung, in welcher ein erfindungsgemäßes impulsartiges Dispensationsverfahren abläuft, unmittelbar nach der Aspiration einer vorbestimmten Menge an Dosierflüssigkeit,
- Figur 2a: die Pipettiervorrichtung von Figur 1 nach Erzeugung eines ersten Unterdrucks im Arbeitsgas bezogen auf den Haltebezugsdruck von Fig. 1, zur Bildung eines Gasvolumens zwischen Pipettieröffnung und aspirierter Dosierflüssigkeit,
- Figur 2b: die Pipettiervorrichtung der Figur 2a nach Erhöhung des Drucks des Arbeitsgases zwischen Pipettierkolben und aspirierter Dosierflüssigkeit, zur Verlagerung des pipettieröffnungsnäheren Meniskus zur Pipettieröffnung hin,
- Figur 2c: die Pipettiervorrichtung der Figur 2b nach Erzeugung eines zweiten Unterdrucks im Arbeitsgas bezogen auf den Haltebezugsdruck von Fig. 1, zur Bildung eines Gasvolumens zwischen Pipettieröffnung und aspirierter Dosierflüssigkeit,
- Figur 3a: die Pipettiervorrichtung von Figur 2c, die nur der Übersichtlichkeit halber auf dem dritten Figurenblatt wiederholt dargestellt ist,
- Figur 3b: die Pipettiervorrichtung von Figur 3a während der schlagartigen Erzeugung eines Überdruckimpulses,
- Figur 3c: die Pipettiervorrichtung von Figur 3b nach Vollendung der peitschenartigen Kolbenbewegung zur Dispensation eines Einzel-Dosiervolumens von 450 nl.
- Fig. 4: grobschematische Graphen von zeitlichen Verläufen eines Steuersignals und der damit bewirkten Kolbenbewegung des Pipettiervorgangs der Figuren 3a bis 3c,
- Fig. 5: die Darstellung von Figur 4 mit lediglich dem Steuersignal und
- Fig. 6: die Darstellung von Figur 4 mit lediglich der Ort-Zeit-Kurve des Kolbens.

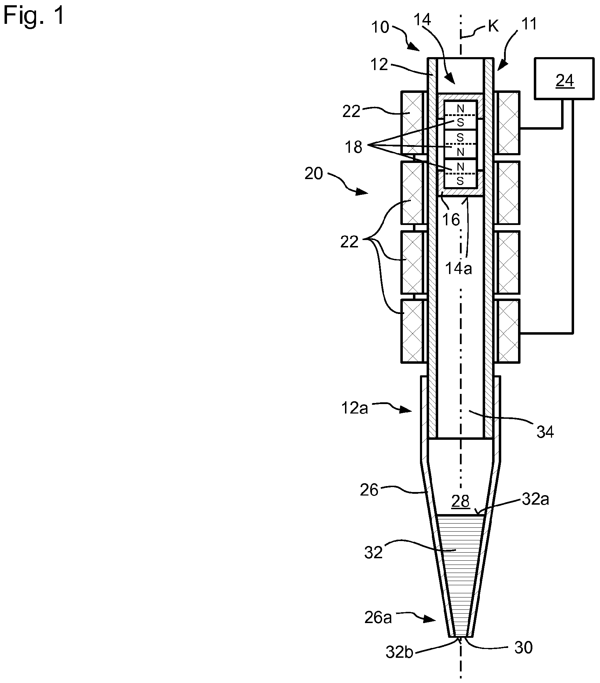

In den Figuren 1 bis 3c ist eine erfindungsgemäße Pipettiervorrichtung allgemein mit 10 bezeichnet. Diese umfasst einen Pipettierkanal 11, umfassend einen Zylinder 12, welcher sich längs einer als geradlinige Kanalachse ausgestalteten Kanalbahn K erstreckt. In diesem Pipettierkanal 11 ist ein Kolben 14 längs der Kanalbahn K beweglich aufgenommen.

Der Kolben 14 umfasst zwei Endkappen 16 (aus Gründen der Übersichtlichkeit ist nur die untere in den Figuren 1 bis 3c mit Bezugszeichen versehen), zwischen welchen eine Mehrzahl von Permanentmagneten 18 (im vorliegenden Beispiel drei Permanentmagnete 18) aufgenommen sind. Die Permanentmagnete 18 sind zur Erzielung eines längs der Kanalbahn K trennscharfen Magnetfelds längs der Kanalachse K polarisiert und paarweise mit aufeinander zuweisenden gleichnamigen Polen angeordnet. Aus dieser Anordnung resultiert ein vom Kolben 14 ausgehendes Magnetfeld, welches um die Kanalachse K weitestgehend gleichförmig, also im Wesentlichen rotationssymmetrisch bezüglich der Kanalachse K ist und welches längs der Kanalachse K einen hohen Gradienten der magnetischen Feldstärke aufweist, sodass sich ungleichnamige Polarisierungszonen trennscharf längs der Kanalbahn K alternierend abwechseln. Damit kann beispielsweise durch Hall-Sensoren (nicht dargestellt) eine hohe Positionsauflösung bei der Positionserfassung des Kolbens 14 längs der Kanalachse K erreicht werden und es kann eine sehr effiziente Ankopplung eines äußeren Magnetfelds an den Kolben 14 erreicht werden.

Die Endkappen 16 sind bevorzugt aus reibungsarmem, Graphit umfassenden Material gebildet, wie es beispielsweise von kommerziell erhältlichen Kappen der Fa. Airpot Corporation in Norwalk, Connecticut, (US) bekannt ist. Um die von diesem Material bereitgestellte geringe Reibung möglichst vollständig ausschöpfen zu können, umfasst der Pipettierkanal 11 bevorzugt einen Zylinder 12 aus Glas, so dass bei einer Bewegung des Kolbens 14 längs der Kanalachse K das Graphit umfassende Material äußerst reibungsarm an einer Glasfläche gleitet.

Der Kolben 14 bildet somit einen Läufer eines Linearmotors 20, dessen Stator von den Pipettierkanal 11 umgebenden Spulen 22 (hier sind beispielhaft lediglich vier Spulen dargestellt) gebildet ist.

Es sei ausdrücklich darauf hingewiesen, dass die Figuren 1 bis 3c lediglich eine grobschematische Längsschnittdarstellung einer erfindungsgemäßen Pipettiervorrichtung 10 zeigt, die keinesfalls maßstäblich zu verstehen ist. Weiterhin sind Mehrzahlen von Bauteilen durch eine beliebige Bauteilanzahl, wie etwa drei Permanentmagnete 18 und vier Spulen 22, dargestellt. Tatsächlich kann sowohl die Anzahl der Permanentmagnete 18 wie auch die Anzahl der Spulen 22 größer oder auch kleiner als die dargestellte Anzahl sein.

Der Linearmotor 20, genauer seine Spulen 22, werden über eine Steuervorrichtung 24 angesteuert, die signalübertragungsmäßig mit den Spulen 22 verbunden ist. Als Signal gilt auch die Übertragung elektrischen Stroms zur Bestromung der Spulen und damit zur Erzeugung eines Magnetfelds durch diese.

An dem dosierseitigen Ende 12a des Zylinders 12 ist in an sich bekannter Weise lösbar eine Pipettierspitze 26 angebracht. Die Verbindung der Pipettierspitze 26 mit dem dosierseitigen Längsende 12a des Zylinders 12 ist ebenfalls lediglich grobschematisch dargestellt.

Die Pipettierspitze 26 definiert einen Pipettierraum 28 in ihrem Inneren, welcher am kopplungsfernen Längsende 26a ausschließlich durch eine Pipettieröffnung 30 zugänglich ist. Die Pipettierspitze 26 verlängert den Pipettierkanal 11 während ihrer Ankopplung an den Zylinder 12 bis zur Pipettieröffnung 30.

In dem in Figur 1 dargestellten Beispiel der Pipettiervorrichtung 10 unmittelbar nach Abschluss eines konventionellen Aspirationsvorgangs im quasi-synchronen Pipettierbetrieb durch dieselbe Pipettiervorrichtung 10 ist im Pipettierraum 28 - und damit in der Pipettiervorrichtung 10 - eine Menge an Dosierflüssigkeit 32 aufgenommen.

Zwischen dem Kolben 14 und der Dosierflüssigkeit 32 befindet sich dauerhaft Arbeitsgas 34, welches als Kraftvermittler zwischen dem Kolben 14 und der Dosierflüssigkeit 32 dient. Bevorzugt befindet sich zwischen dem Kolben 14 und der Dosierflüssigkeit 32 nur das Arbeitsgas 34, gegebenenfalls in seiner chemischen Zusammensetzung in vernachlässigbarer Weise verändert durch die Aufnahme flüchtiger Bestandteile aus der Dosierflüssigkeit 32.

Das Arbeitsgas 34 ist auch bei völlig entleerter Pipettierspitze 26 zwischen Kolben 14 und einer Dosierflüssigkeit 32 angeordnet, da die Pipettierspitze 26 zur Aspiration von Dosierflüssigkeit 32 in einen entsprechenden Dosierflüssigkeitsvorrat eingetaucht wird, sodass in diesem Zustand wenigstens an der Pipettieröffnung 30 ein Meniskus der Dosierflüssigkeit 32 vorhanden ist. Somit befindet sich Arbeitsgas 34 in jedem für einen Pipettiervorgang relevanten Zustand der Pipettiervorrichtung 10 dauerhaft vollständig zwischen dem Kolben 14 und einer Dosierflüssigkeit 32 und trennt diese voneinander.

Genauer befindet sich das Arbeitsgas 34 zwischen einer dosierseitigen Endfläche 14a des Kolbens 14, welche im vorliegenden Beispiel durch eine in axialer Richtung - bezogen auf die Kanalbahn K - zur Dosieröffnung 30 hin weisende Endfläche der Endkappe 16 gebildet ist und einem pipettieröffnungsferneren Meniskus 32a der im Pipettierraum 28 als Flüssigkeitssäule aufgenommenen Dosierflüssigkeit 32.

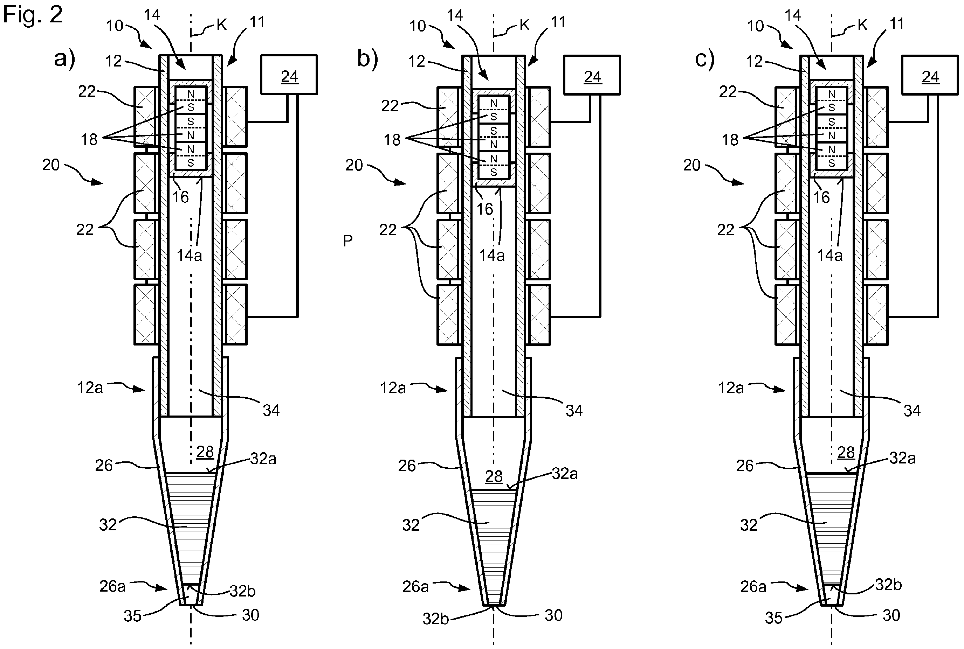

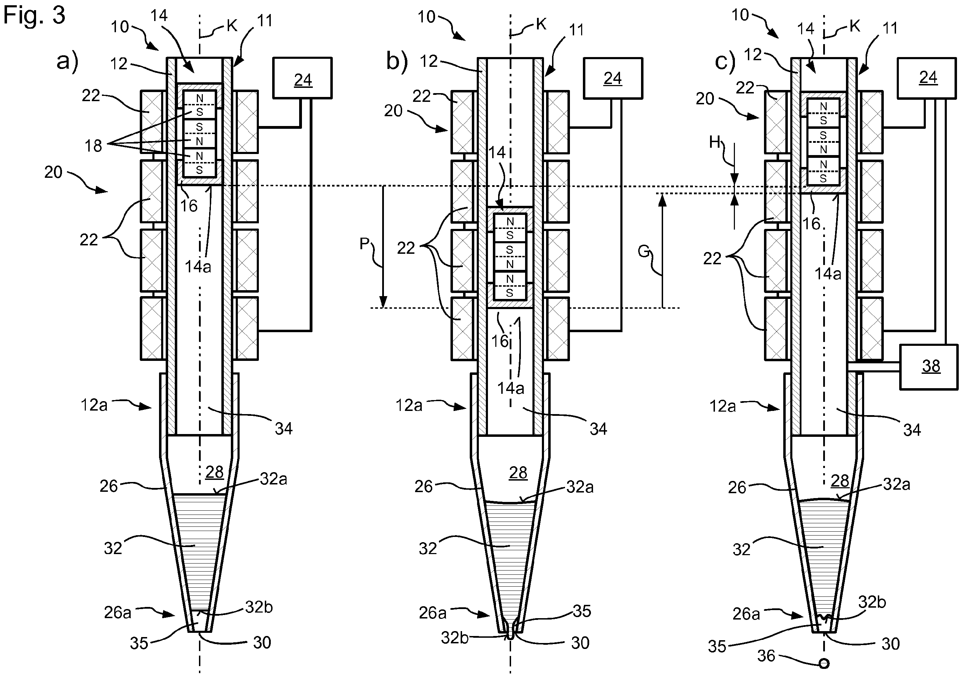

Ausgehend von dem in Figur 1 gezeigten Zustand wird nachfolgend eine Vorbereitung für einen impulsartigen Dispensationsvorgang der erfindungsgemäßen Pipettiervorrichtung 10 sowie der impulsartige Dispensationsvorgang selbst beschrieben:
Mit Verweis auf die Figuren 2a bis 2c wird eine Vorbereitung der Pipettiervorrichtung 10 beschrieben, mit welcher die Genauigkeit des impulsartigen Dispensationsvorgangs, welcher in den Figuren 3b und 3c dargestellt ist, erheblich erhöht werden kann. Dies bedeutet im Wesentlichen, dass geringere minimale Dispensationsdosen mit hoher Wiederholgenauigkeit abgegeben werden können als ohne entsprechende Vorbereitung.

Ausgehend von dem Zustand der Pipettiervorrichtung 10 unmittelbar nach Aspiration der vorbestimmten Dosierflüssigkeitsmenge 32 in die Pipettierspitze 26 (s. Fig. 1) bestromt die Steuervorrichtung 24 die Spulen 22 derart, dass der Pipettierkolben 14 im Sinne einer Erzeugung eines (ersten) Unterdrucks im Arbeitsgas 34 bewegt wird, das bedeutet von der Pipettieröffnung 30 weg.

Dadurch wird die in der Pipettiervorrichtung 10, genauer im Pipettieraufnahmeraum 28 der Pipettierspitze 26 bereitgestellte Dosierflüssigkeitsmenge 32 längs der Kanalachse K von der Pipettieröffnung 30 weg in die Pipettiervorrichtung 10, genauer in die Pipettierspitze 26, hinein verlagert. Die bereitgestellte Dosierflüssigkeit 32 ist zum Pipettierkolben 14 hin durch einen der Pipettieröffnung 30 ferner liegenden Meniskus 32a begrenzt und ist zur Pipettieröffnung 30 hin durch einen pipettieröffnungsnäheren Meniskus 32b begrenzt. Durch die Verlagerung der Dosierflüssigkeit 32 von der Pipettieröffnung 30 weg bildet sich zwischen der Pipettieröffnung 30 und dem pipettieröffnungsnäheren Meniskus 32b ein Gasvolumen 35.

Bei einer beispielhaft aufgenommenen Dosierflüssigkeitsmenge 32 von 40 µl beträgt das Gasvolumen 35 unmittelbar vor Auslösen des impulsartig dispensierenden Überdruckimpulses bevorzugt 4 bis 10 µl, besonders bevorzugt 4 bis 6 µl.

Durch die Verlagerung des pipettieröffnungsnäheren und daher den späteren Dosiertropfen abgebenden Meniskus 32b von der Pipettieröffnung 30 weg erhält der nach dem Aspirieren mit undefinierter Gestalt, insbesondere undefinierter Wölbung, an der Pipettieröffnung 30 vorliegende Meniskus 32b eine stärker definierte Gestalt. Wenngleich nach dem Erzeugen des Gasvolumens 35 gemäß Figur 2a die Gestalt des pipettieröffnungsnäheren Meniskus 32b nicht vollständig definiert ist, so schwankt dessen Gestalt jedoch in nur geringem Maße um eine üblicherweise zu erwartende Gestalt.

Die Gestalt des pipettieröffnungsnäheren Meniskus 32b ist beispielsweise abhängig von der Oberflächenspannung der Dosierflüssigkeit 32, von deren Dichte, von deren Viskosität und von der Benetzbarkeit der Wandung der Pipettierspitze 26.

Gemäß Figur 2b kann die Steuervorrichtung 24 die Spulen 22 anschließend zur Bewegung des Pipettierkolbens 14 im Sinne einer Druckerhöhung im Arbeitsgas 34 antreiben, d. h. den Pipettierkolben 14 in Richtung zur Pipettieröffnung 30 hin verlagern. Dadurch wird die in der Pipettierspitze 26 bereitgestellte Dosierflüssigkeit 32 wieder zurück in Richtung zur Pipettieröffnung 30 hin verlagert, jedoch nicht darüber hinaus. Das Gasvolumen 35 zwischen Pipettieröffnung 30 und pipettieröffnungsnäherem Meniskus 32b wird dadurch geringer oder verschwindet sogar ganz.

Weiter kann die Steuervorrichtung 24 erneut die Spulen 22 zur Bewegung des Pipettierkolbens 14 im Sinne einer Verringerung des Drucks des Arbeitsgases 34 antreiben, d. h. in einem Aspirationssinn von der Pipettieröffnung 30 weg, wodurch erneut ein Gasvolumen 35 zwischen der Pipettieröffnung 30 und dem pipettieröffnungsnäheren Meniskus 32b der Dosierflüssigkeit 32 gebildet oder/und vergrößert wird. Durch die Hin- und Herbewegung der Dosierflüssigkeit 32 in der Pipettierspitze 26, wie sie in den Figuren 2a bis 2c dargestellt ist, wird für ein und dieselbe Dosierflüssigkeit 32 am Ende des Erzeugens des zweiten Unterdrucks gemäß Figur 2c ein stets gleich gestalteter Meniskus 32b gebildet, was für den anschließenden impulsartigen Dispensationsvorgang, wie er in den Figuren 3a bis 3c dargestellt und beschrieben ist, von Vorteil ist. Der Vorteil liegt in der Verringerung der minimal dispensierbaren Flüssigkeitsmenge und die erreichbare Wiederholbarkeit derselben beim Aliquotieren.

Die Figur 3a stellt die Pipettiervorrichtung 10 von Figur 2c auf gesonderten Figurenblatt dar, um den Vergleich der unterschiedlichen Zustände der Pipettiervorrichtung 10 unmittelbar vor und während der Erzeugung eines Überdruckimpulses besser vergleichen zu können.

Zentraler Punkt der erfinderischen Idee der vorliegenden Anmeldung ist eine peitschenartige Bewegung des Kolbens 14. Diese peitschenartige Bewegung kommt in mehrerlei Ausprägungen zum Ausdruck.

Aufgrund des bereitgestellten bevorzugten Linearmotors 20 kann der Kolben 14 mit enormer Bewegungsdynamik längs der Kanalachse K bewegt werden. Zur Dispensation einer kleinen Flüssigkeitsmenge, etwa 0,5 µl der Dosierflüssigkeit 32, wird der Kolben 14 zunächst schnell im Sinne einer Erzeugung einer Druckerhöhung im Arbeitsgas 34 (hier: Dispensationsrichtung) zur Dosieröffnung 30 hin bewegt. Die Steuervorrichtung 24 steuert die Spulen 22 des Linearmotors 20 derart an, dass der Kolben 14 einen so großen Hub P ausführt, dass die dosierseitige Endfläche 14a des Kolbens 14 längs des Hubs P ein Vielfaches, etwa das 40-fache, des vorbestimmten Einzel-Dosiervolumens 36 (siehe Figur 3c) überstreicht. Der Kolben befindet sich dann in der in Figur 3b gezeigten Stellung am unteren Totpunkt seiner Bewegung in Dispensationsrichtung, woraufhin der Kolben 14 zu einer entgegengesetzten Bewegung in Aspirationsrichtung, also im Sinne einer Verringerung des Drucks des Arbeitsgases 34 (siehe Pfeil G) angetrieben wird.

Die Bewegung des Kolbens 14 in Dispensationsrichtung dauert weniger als 10 ms. Wenn der Kolben 14 seinen unteren Totpunkt erreicht, hat sich noch kein Teil der Dosierflüssigkeit 32 von der Pipettierspitze 26 gelöst. Der pipettieröffnungsnähere Meniskus 32b ist in einer eine Tropfenabgabe vorbereitenden Gestalt dargestellt. Die Gestalt des Meniskus 32b ist lediglich zu Illustrationszwecken gewählt, um zu verdeutlichen, dass eine Abgabe eines Dosierflüssigkeitstropfens 36 (s. Fig. 3c) bevorsteht. Der pipettieröffnungsfernere Meniskus 32a ist konkav gekrümmt dargestellt, um die Wirkung des Überdruckimpulses auf die Dosierflüssigkeit 32 darzustellen.

Der Kolben wird in Dispensationsrichtung etwa mit einer maximalen Geschwindigkeit von etwa 10.000 µl/s bewegt und hierzu mit einer Beschleunigung von bis zu 8 x 10⁶ µl/s² beschleunigt und wieder verzögert. Die maximale Geschwindigkeit tritt allerdings nur kurzzeitig auf. Dies bedeutet, dass der Kolben in dem genannten Fall, in dem seine dosierseitige Endfläche 14a im Verlauf der Dispensationsbewegung ein Volumen von etwa dem 40-fachen des Einzel-Dosiervolumens 36, also etwa 20 µl, überstreicht, für diese Dispensationsbewegung etwa 6 bis 8 ms benötigt.

Die Dosierflüssigkeit 32 ist hier zu träge, um dieser Kolbenbewegung zu folgen. Stattdessen wird vom Kolben 14 ein Druckerhöhungspuls über das Arbeitsgas 34 hinweg zur Dosierflüssigkeit 32 in der Pipettierspitze 26 übertragen. Ausgehend von der in Figur 3b gezeigten Darstellung wird nun der Kolben 14 möglichst sofort zurück in Aspirationsrichtung beschleunigt, wobei der Bewegungshub G in Aspirationsrichtung im vorliegenden Fall insoweit geringer ist als der Hub P der Bewegung in Dispensationsrichtung, dass die endseitige Kolbenfläche 14a im Verlauf der Bewegung in Aspirationsrichtung ein Aspirationsvolumen überstreicht, welches um das Einzel-Dosiervolumen 36 geringer ist als das überstrichene Dispensationsvolumen.

Dies muss allerdings nicht so sein. Das Aspirationsvolumen kann auch genauso groß sein wie das Dispensationsvolumen. Ein um das Einzel-Dosiervolumen 36 reduziertes Aspirationsvolumen hat jedoch den Vorteil, dass sich die Lage des pipettieröffnungsnäheren Meniskus nach dem Pipettieren nicht ändert, was vor allem im Aliquotierbetrieb vorteilhaft ist.

In der In Figur 3c gezeigten Endstellung der Pipettiervorrichtung 10 nach dem Ende des impulsartigen Dispensationsvorgangs befindet sich die dosierseitige Endfläche 14a um einen resultierenden Hub H von der Ausgangsstellung der Figur 3a entfernt, wobei im dargestellten Beispiel die Kolbenfläche des Kolbens 14 multipliziert mit dem resultierenden Hub H dem Einzel-Dosiervolumen 36 entspricht.

Auch die Bewegung in Aspirationsrichtung läuft mit der genannten maximalen Geschwindigkeit ab, sodass auch diese Bewegung etwa 6 bis 8 ms benötigt. Mit zusätzlichen Verweilzeiten am unteren Totpunkt, welche durch Überwinden der Haftreibungsgrenze entstehen können, sowie unter Einbeziehung von etwaig auftretenden Bewegungsüberschwingern des Kolbens 14 um seine Soll-Position erfolgt die gesamte Kolbenbewegung bis zum Erreichen der Endstellung, wie sie in Figur 3c gezeigt ist, in etwa 14 bis 30 ms.

Erst nach der Umkehr der Kolbenbewegung von der Aspirationsrichtung in die Dispensationsrichtung wird ein definiertes Einzel-Dosiervolumen 36 in Form eines Tropfens von der Pipettieröffnung 30 weggeschleudert. Dieser Tropfen bewegt sich längs der verlängert gedachten Kanalbahn K zu einem unter der Pipettieröffnung 30 platzierten Dosierziel, etwa einem Behälter oder einem Well. Der pipettieröffnungsnähere Meniskus 32b kann nach dem Abschleudern des Dosierflüssigkeitstropfens 36 noch kurzzeitig nachschwingen.

Die Pipettierspitze 26 kann ein das Einzel-Dosiervolumen wesentlich übersteigendes Nenn-Pipettierraumvolumen aufweisen, etwa 200 - 400 µl, bevorzugt 300 µl.

Die Bewegung des Kolbens 14 in Aspirationsrichtung verläuft wiederum so schnell, dass von der dosierseitigen Endfläche 14a zur Dosierflüssigkeit 32 im Pipettierraum 28 ein Druckverringerungspuls übertragen wird.

Der Druckerhöhungspuls der Kolbenbewegung in Dispensationsrichtung bildet die steile steigende Flanke eines Überdruckimpulses, dessen steile fallende Flanke der Druckverringerungspuls der Kolbenbewegung in Aspirationsrichtung bildet. Je zeitlich kürzer die einzelne Kolbenbewegung ist, desto steiler ist die Flanke des ihr zugeordneten Druckveränderungspulses. Die beiden in entgegengesetzten Sinnen wirkenden Druckveränderungspulse können so einen "harten" Überdruckimpuls mit steilen Flanken definieren.

Das Auftreffen des so gebildeten "harten" Überdruckimpulses führt zu dem äußerst präzise wiederholbaren Dispensationsergebnis.

Überraschenderweise ist der hier vorgestellte Dispensationsvorgang unabhängig von der Größe der gewählten Pipettierspitze 26. Die gleiche oben beschriebene Kolbenbewegung würde auch bei einer deutlich kleineren Pipettierspitze von etwa einem Nenn-Pipettierraumvolumen von 50 µl zu exakt dem gleichen Ergebnis führen, vorausgesetzt, das gleiche Arbeitsgas und die gleiche Dosierflüssigkeit werden weiterhin bei unveränderten Dispensationsparametern verwendet.

Somit eignen sich die vorliegende erfindungsgemäße Pipettiervorrichtung und das vorgestellte erfindungsgemäße impulsartige Dispensationsverfahren hervorragend zum Aliquotieren von Flüssigkeiten aus selbst großen in Pipettierspitzen 26 aufgenommenen Vorräten von Dosierflüssigkeit 32. Auch über viele Aliquotier-Zyklen hinweg ändert sich das Dispensationsverhalten der Pipettiervorrichtung 10 bei sonst gleichen Bedingungen nicht. Das Dispensationsverhalten der erfindungsgemäßen Pipettiervorrichtung 10 ist somit auch unabhängig vom Füllungsgrad einer an den Zylinder 12 angekoppelten Pipettierspitze 26, solange diese für ein impulsartiges Dispensieren ausreichend gefüllt ist.

In Figur 3c ist angedeutet, dass ein Drucksensor 38 den Druck im Inneren des Pipettierkanals 11, also den Druck des Arbeitsgases 34 zwischen der Dosierflüssigkeit 32 und der dosierseitigen Endfläche 14a des Kolbens 14, erfassen kann und über eine Signalleitung an die Steuereinrichtung 24 übertragen kann. Somit ist bei der Verwendung entsprechend schneller Drucksensoren 38 sogar eine vom Druck des Arbeitsgases 34 abhängige Bewegungsregelung des Kolbens zur Ausführung einer wie oben vorgestellten peitschenartigen Kolbenbewegung möglich.

Die Kolbenbewegung kann aufgrund der Massenträgheit dem die Bewegung begründenden Steuersignal möglicherweise nicht vollkommen exakt folgen. An Stellen großer dynamischer Kräfte - namentlich bei der Umkehr der Bewegungsrichtung von der Dispensationsrichtung in die Aspirationsrichtung, aber auch beim Anhalten des Kolbens - kann der Kolben zum Überschwingen neigen. Entscheidend sollen daher im Zweifel die die Bewegung begründenden Steuersignale sein, die Abbild einer Soll-Bewegung sind.

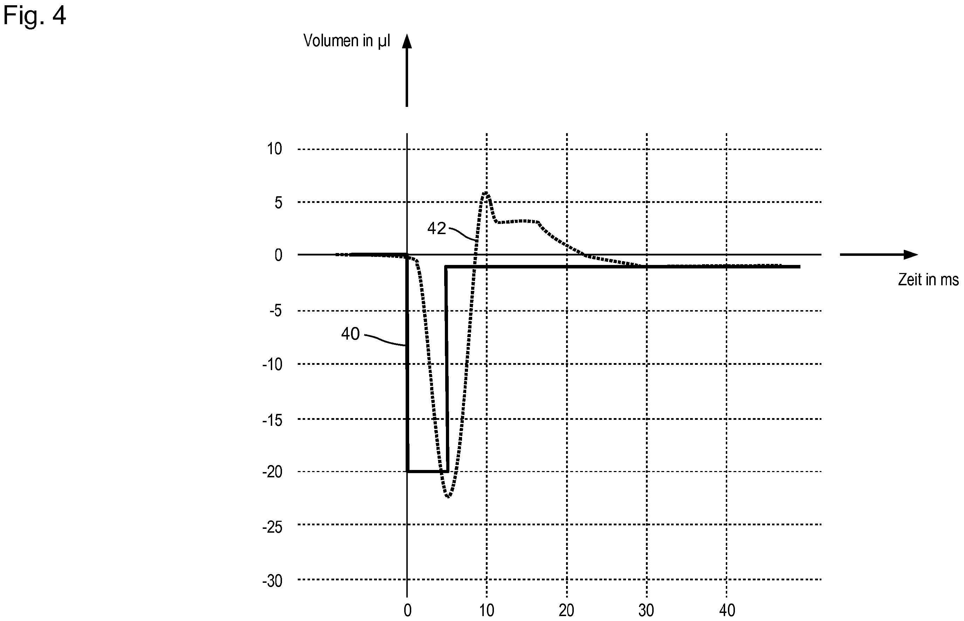

In Figur 4 ist grobschematisch und lediglich beispielhaft ein zeitlicher Verlauf 40 eines Steuersignals (durchgezogene Linie) und ein zeitlicher Verlauf 42 der Bewegung des Kolbens 14 (gestrichelte Linie) schematisiert dargestellt, wie sie bei einem Dispensationsvorgang der Figuren 3a bis 3c vorliegen könnten.

Die aktuelle Kolbenstellung zu Beginn des Dispensationsvorgangs, also die in Figur 3a gezeigte Kolbenstellung, ist in Figur 4 als Nullpunktlinie gewählt.

Die Abszisse der Darstellung von Figur 4 zeigt die Zeit in Millisekunden, wobei eine Rasterung von jeweils 10 ms gewählt ist.

Die Ordinate zeigt das Volumen in Mikroliter, wobei in Bezug auf die Ort-Zeit-Kurve 42 des Kolbens 14 das Volumen der Ordinatenachse das von der dosierseitigen Endfläche 14a des Kolbens 14 überstrichene Volumen angibt.

Zwar ist das Steuersignal des Graphen 40 ein elektrisches Signal, es kann jedoch als Soll-Ort-Zeit-Kurve des Kolbens 14 aufgefasst und daher ebenfalls in Mikrolitern im Sinne eines von der dosierseitigen Endfläche 14a des Kolbens 14 überstrichenen Soll-Volumens angegeben werden.

Das Steuersignal 40 ist ein Rechtecksignal, das zur Zeit t = 0 ms von 0 auf -20 µl springt, also dem 40-fachen des Einzel-Dosiervolumens 36. Das negative Vorzeichen ergibt sich aus der Bewegungsrichtung: ein bei Bewegung der dosierseitigen Endfläche 14a des Kolbens 14 zur Pipettieröffnung 30 hin überstrichenes Volumen (Dispensationsvolumen) ist negativ, ein bei Bewegung von der Pipettieröffnung weg überstrichenes Volumen (Aspirationsvolumen) ist positiv. Diese Vorzeichenkonvention gilt sowohl für das Steuersignal 40 wie auch für die tatsächliche Bewegung 42 des Kolbens 14.

Nach 5 ms springt das rechteckförmige Steuersignal 40 zurück auf -0,5 µl, sodass das Steuersignal 40 - wie zuvor im Zusammenhang mit den Figuren 3a bis 3c beschrieben - ein Soll-Dispensationsvolumen von 20 µl und ein Soll-Aspirationsvolumen von 19,5 µl anzeigt, welche innerhalb von 5 ms überstrichen werden sollen.

Der Kolben 14 kann dem rechteckförmigen Steuersignal 40 naturgemäß nicht exakt folgen, da ein rechteckförmiges Steuersignal eine nahezu unendlich schnelle Bewegung erfordern würde, um der fallenden Flanke (die das Dispensationsvolumen anzeigt) und der steigenden Flanke (die das Aspirationsvolumen anzeigt) des Steuersignals 40 zu folgen.

Aufgrund der zu überwindenden Reibungskräfte sowie der ebenfalls zu überwindenden Massenträgheit und anderen zusätzlichen Einflüssen, wie etwa der am Arbeitsgas zu verrichtenden Arbeit, setzt sich der Kolben 14 zwar etwa 1 ms nach dem Start des Steuersignals bei 0 ms in Bewegung, benötigt aber etwa weitere 4 ms, um zu seinem unteren Totpunkt zu gelangen, bei welchem der Kolben 14 seine Bewegungsrichtung sofort umkehrt.

Dies bedeutet, dass der Kolben 14 seinen unteren Totpunkt etwa dann erreicht, wenn das Steuersignal 40 auf seinen Endwert von -0,5 µl gesprungen ist.

Aufgrund der Massenträgheit kann die Kolbenbewegung in Pipettierrichtung geringfügig überschießen, sodass die dosierseitige Endfläche 14a nicht nur die vom Steuersignal 40 tatsächlich angewiesenen -20 µl, sondern tatsächlich etwa -22,5 µl überstreichen kann, bis es zur Bewegungsrichtungsumkehr kommt.

Wie in der Kurve 42 von Figur 4 zu erkennen ist, erreicht der Kolben 14 bei etwa 8 ms seine Zielposition, schwingt jedoch erheblich über und erreicht tatsächlich erst etwa 29 ms nach Beginn des Steuersignals den Stillstand bei seiner Soll-Endposition.

Das dargestellte Überschwingen gegen Ende der Kolbenbewegung in Aspirationsrichtung hat jedoch keinen Einfluss auf das tatsächlich dispensierte Dosierflüssigkeitsvolumen.

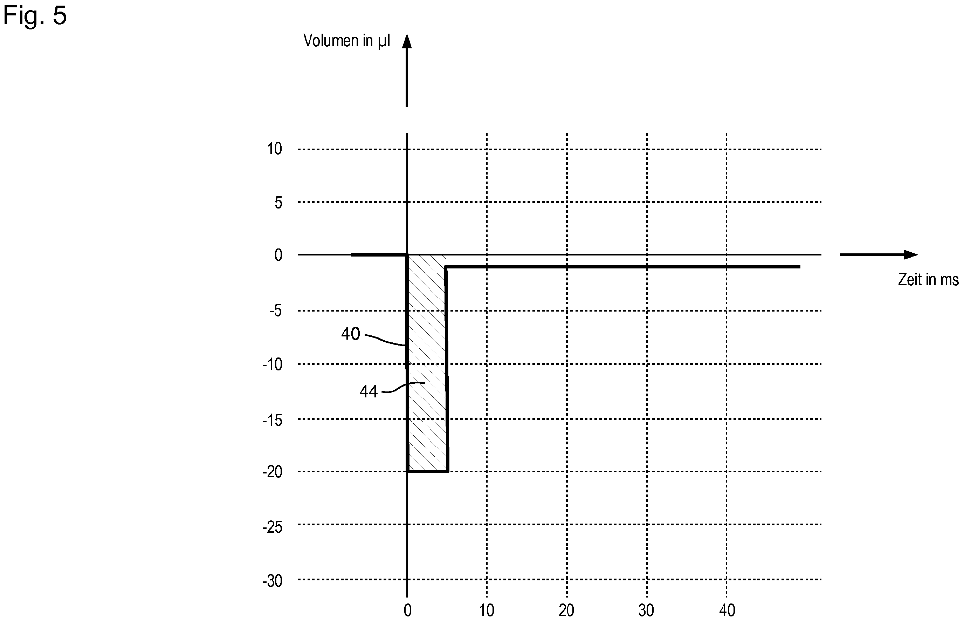

In Figur 5 ist lediglich die Steuersignalkurve 40 erneut dargestellt. Das Integral des Steuersignals 40 über die Zeit vom Beginn des die Kolbenbewegung in Dispensationsrichtung bewirkenden Steuersignal(abschnitt)s bis zum Ende des die Kolbenbewegung in Aspirationsrichtung bewirkenden Steuersignal(abschnitt)s ist ein Maß für das tatsächlich bei dem so angesteuerten impulsartigen Dispensationsvorgang dispensierte Dosierflüssigkeitsvolumen. Das so beschriebene Integral entspricht der vom Steuersignal 40 innerhalb der genannten zeitlichen Grenzen umschriebenen Fläche. Diese Fläche ist in Figur 5 als Fläche 44 schraffiert dargestellt. Die Fläche reicht bis zur Nulllinie des Volumens, von welcher das Steuersignal 40 ausging.

Daher ist es unerheblich, ob das Steuersignal tatsächlich bis zur Nulllinie zurückkehrt oder um das Einzel-Dosiervolumen 36 in Dispensationsrichtung verschoben endet.

Den genauen Zusammenhang zwischen der vom Steuersignal 40 umschriebenen Fläche 44 und dem damit tatsächlich dipensierten Dosierflüssigkeitsvolumen lässt sich für unterschiedliche Flüssigkeitsklassen sehr einfach empirisch feststellen und in einem Datenspeicher ablegen.

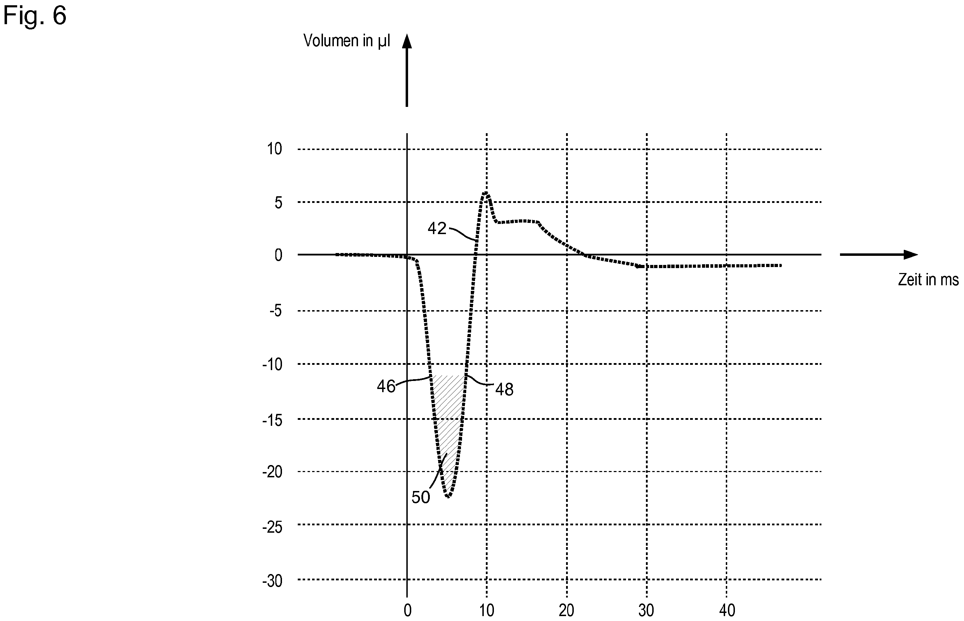

In Figur 6 ist alleine die Ort-Zeit-Kurve 42 des Kolbens 14 ohne die Steuerkurve 40 dargestellt. Mit 46 und 48 ist der Ort der "Halbwegsweite" des Kolbens 14 zwischen seiner Startstellung bei 0 µl und seinem Umkehrpunkt der Bewegungsrichtung bei etwa -22,5 µl bezeichnet. Die Halbwegsweite liegt daher bei etwa bei -11,25 µl.

Auch das zeitliche Integral der Ort-Zeit-Kurve des Kolbens 14 - etwa repräsentiert durch die Ort-Zeit-Kurve der dosierseitigen Kolbenfläche 14a als einem Bezugspunkt des Kolbens 14 - zwischen dem Durchgang durch den Ort der Halbwegsweite bei der Bewegung in Dispensationsrichtung und dem erneuten Durchgang durch diesen Ort während seiner Bewegung in Aspirationsrichtung ist ein Maß für das mit der Kolbenbewegung tatsächlich impulsartig dispensierte Einzel-Dosiervolumen 36. Eine durch dieses Integral gebildete Fläche ist als Fläche 50 in Figur 6 schraffiert dargestellt. Der Flächeninhalt der Fläche 50 ist ebenso ein Maß für das tatsächlich pipettierte Einzel-Dosiervolumen 36 wie der Flächeninhalt der Fläche 44 aus Figur 5. Der Zusammenhang zwischen dem Flächeninhalt der Fläche 50 und dem tatsächlich pipettierten Einzel-Dosiervolumen 36 kann jedoch ein anderer sein als jener zwischen dem Flächeninhalt der Fläche 44 und dem Einzel-Dosiervolumen 36. Auch dieser Zusammenhang lässt sich für unterschiedliche Flüssigkeitsklassen einfach empirisch ermitteln und in einem Datenspeicher der Pipettiervorrichtung hinterlegen.

Somit lassen sich sehr kleine Einzel-Dosiervolumen 36 von 1 µl oder weniger in höchstem Maße wiederholgenau mit der gleichen Pipettiervorrichtung 10 impulsartig dispensieren, mit welcher auch große Pipettiervolumen von mehreren 100 µl in herkömmlichem quasi-synchronen Pipettierbetrieb pipettiert werden können.

## Patentansprüche

1. Pipettiervorrichtung (10) zur impulsartigen Dispensation von kleinen Dosierflüssigkeitsdosen (36) von nicht mehr als 1 µl aus einer größeren in der Pipettiervorrichtung (10) bereitgestellten Dosierflüssigkeitsmenge (32) unter Vermittlung eines druckveränderlichen Arbeitsgases (34), wobei die Pipettiervorrichtung (10) umfasst:
- einen wenigstens teilweise mit Arbeitsgas (34) gefüllten Pipettierkanal (11),
- eine Druckveränderungsvorrichtung (14, 22) zur Veränderung des Drucks des Arbeitsgases (34), und
- eine Steuervorrichtung (24) zur Ansteuerung der Druckveränderungsvorrichtung (14, 22),
wobei die Steuervorrichtung (24) dazu ausgebildet ist, die Druckveränderungsvorrichtung (14, 22) - bezogen auf einen Haltebezugsdruck im Pipettierkanal (11), welcher zum unbewegten Halten der Dosierflüssigkeitsmenge (32) erforderlich ist-zur Erzeugung eines Überdruckimpulses im Pipettierkanal (11) mit einer Impulsdauer von nicht mehr als 40 ms anzusteuern,
**dadurch gekennzeichnet, dass** die Steuervorrichtung (24) weiter dazu ausgebildet ist, die Druckveränderungsvorrichtung (14, 22) vor der Erzeugung des Überdruckimpulses im Pipettierkanal (11) bezogen auf den Haltebezugsdruck zur Erzeugung eines Unterdrucks anzusteuern, um dadurch vor der Erzeugung des Überdruckimpulses eine in der Pipettiervorrichtung (10) aufgenommene Dosierflüssigkeitsmenge (32) ein Stück weit von einer Pipettieröffnung (30) weg in die Pipettiervorrichtung (10) hinein zu bewegen, so dass ein eine kleine Dosierflüssigkeitsdosis (36) von nicht mehr als 1 µl abgebender pipettieröffnungsnäherer Meniskus (32b) bei der impulsartigen Dispensation in einem Aufnahmeraum (28) der Pipettiervorrichtung (10) mit Abstand von der Pipettieröffnung (30) angeordnet ist.

2. Pipettiervorrichtung (10) nach Anspruch 1,
**dadurch gekennzeichnet, dass** die Steuervorrichtung (24) dazu ausgebildet ist, zwischen der Erzeugung zweier Überdruckimpulse, welche jeweils einem anderen von zwei unmittelbar aufeinander folgenden impulsartigen Dispensationsvorgängen zugeordnet sind, die Druckveränderungsvorrichtung (14, 22) zur Erzeugung des Haltebezugsdrucks und danach zur Erzeugung des Unterdrucks anzusteuern.

3. Pipettiervorrichtung (10) nach Anspruch 2,
**dadurch gekennzeichnet, dass** die Erzeugung des Unterdrucks eine Erzeugung eines ersten Unterdrucks, danach eine Erzeugung eines betragsmäßig höheren Drucks als den ersten Unterdruck und danach eine Erzeugung eines zweiten Unterdrucks umfasst.

4. Pipettiervorrichtung (10) nach Anspruch 3,
**dadurch gekennzeichnet, dass** der betragsmäßig höhere Druck zwischen dem ersten und dem zweiten Unterdruck höher als der Haltebezugsdruck ist.

5. Pipettiervorrichtung (10) nach einem der vorhergehenden Ansprüche, **dadurch gekennzeichnet, dass** die Steuervorrichtung (24) dazu ausgebildet ist, die Druckveränderungsvorrichtung (14, 22) nach der Erzeugung des Unterdrucks und vor der Erzeugung des Überdruckimpulses zur Erzeugung des Haltebezugsdrucks anzusteuern.

6. Pipettiervorrichtung (10) nach einem der vorhergehenden Ansprüche, **dadurch gekennzeichnet, dass** sie einen Drucksensor (38) zur Erfassung des Drucks des Arbeitsgases (34) aufweist, wobei der Drucksensor (38) zur Übertragung seiner Erfassungsinformation signalübertragungsmäßig mit der Steuervorrichtung (24) verbunden ist, wobei die Steuervorrichtung die Druckveränderungsvorrichtung (14, 22) nach Maßgabe der Erfassungsinformation des Drucksensors (38) ansteuert.

7. Pipettiervorrichtung (10) nach einem der vorhergehenden Ansprüche, **dadurch gekennzeichnet, dass** sie eine vom Pipettierkanal (11) durchsetzte Kopplungsformation zur vorübergehenden Ankopplung einer Pipettierspitze (26) aufweist.

8. Pipettiervorrichtung (10) nach Anspruch 7,
**dadurch gekennzeichnet, dass** sie eine Pipettierspitze (26) aufweist, mit einer Kopplungsgegenformation zum lösbaren Kopplungseingriff mit der Kopplungsformation und mit einer Pipettieröffnung (30) als Durchlassöffnung für Dosierflüssigkeit (32) während eines Aspirationsvorgangs und während eines Dispensationsvorgangs.

9. Pipettiervorrichtung (10) nach einem der vorhergehenden Ansprüche, **dadurch gekennzeichnet, dass** die Druckveränderungsvorrichtung (14, 22) umfasst: einen magnetischer Kolben (14) und elektrisch bestrombare Spulen (22), wobei die Steuervorrichtung (24) dazu ausgebildet ist, die Bestromung der Spulen (22) zu steuern, wobei eine Erzeugung eines Unterdrucks eine Verlagerung des Kolbens (14) in eine erste Richtung umfasst, und wobei die Erzeugung des Überdruckimpulses eine Verlagerung des Kolbens (14) erst in eine der ersten entgegengesetzte zweite Richtung und unmittelbar anschließend in die erste Richtung umfasst, oder
zwei unterschiedliche Arbeitsgas-Druckreservoirs, eines mit Überdruck und eines mit Unterdruck bezogen auf einen Bezugsdruck, wobei jedes der Arbeitsgas-Druckreservoirs über Ventile mit dem Pipettierkanal (11) Druck übertragend verbindbar sind, wobei Steuervorrichtung dazu ausgebildet ist, ein Öffnen und Schließen der Ventile zu steuern, wobei die Erzeugung eines Unterdruck ein Öffnen und ein Schließen des Unterdruckventils umfasst, und wobei die Erzeugung eines Überdruckimpuls ein Öffnen und ein Schließen des Unterdruckventils sowie ein Öffnen und ein Schließen des Überdruckventils umfasst.

10. Verfahren zur impulsartigen Dispensation einer in einer Pipettierspitze (26) aufgenommenen Dosierflüssigkeit (32) aus der Pipettierspitze (26) mit einem Dispensationsvolumen von nicht mehr als 1 µl für einen einzelnen Dispensationsvorgang, umfassend den Schritt eines Erzeugens eines Überdruckimpulses in einem Arbeitsgas (34), welches auf einer von einer Pipettieröffnung (30) abgewandten Seite mit der aufgenommenen Dosierflüssigkeit (32) Druck übertragend in Verbindung steht, um dadurch einen Flüssigkeitstropfen (36) auf der der Pipettieröffnung (30) zugewandten Seite der Dosierflüssigkeit (32) aus dieser heraus zu lösen und von der Dosierflüssigkeit (32) weg zu beschleunigen,
**dadurch gekennzeichnet, dass** das Verfahren vor dem Erzeugen des Überdruckimpulses folgenden Schritt umfasst:
- bezogen auf den Haltebezugsdruck im Pipettierkanal (11), welcher zum unbewegten Halten der Dosierflüssigkeitsmenge (32) erforderlich ist: Erzeugen eines Unterdrucks im Arbeitsgas (34) und dadurch Bewegen der aufgenommenen Dosierflüssigkeit (32) von der Pipettieröffnung (30) weg, unter Bildung oder Vergrößerung eines Gasvolumens (35) zwischen der Dosierflüssigkeit (32) und der Pipettieröffnung (30), so dass ein eine kleine Dosierflüssigkeitsdosis (36) von nicht mehr als 1 µl abgebender pipettieröffnungsnäherer Meniskus (32b) bei der impulsartigen Dispensation in einem Aufnahmeraum (28) der Pipettiervorrichtung (10) mit Abstand von der Pipettieröffnung (30) angeordnet ist.

11. Verfahren nach Anspruch 10,
**dadurch gekennzeichnet, dass** es nach dem Erzeugen des Unterdrucks, aber vor dem Erzeugen des Überdruckimpulses folgenden Schritt umfasst:
- Erhöhen des Drucks im Arbeitsgas (34) und dadurch Bewegen der aufgenommenen Dosierflüssigkeit (32) zu der Pipettieröffnung (30) hin.

12. Verfahren nach Anspruch 11,
**dadurch gekennzeichnet, dass** es nach dem Erhöhen des Drucks im Arbeitsgas (34), aber vor dem Erzeugen des Überdruckimpulses folgenden Schritte umfasst:
- Erzeugen eines Unterdrucks im Arbeitsgas (34) bezogen auf den Haltebezugsdruck und dadurch Bewegen der aufgenommenen Dosierflüssigkeit (32) von der Pipettieröffnung (30) weg, unter Bildung eines Gasvolumens (35) zwischen der Dosierflüssigkeit (32) und der Pipettieröffnung (30).

## Claims

1. A pipetting apparatus (10) for pulsed dispensing, with the intermediary of a variable-pressure working gas (34), of small metered-liquid doses (36) of no more than 1 µl from a larger metered-liquid quantity (32) furnished in the pipetting apparatus (10), the pipetting apparatus (10) encompassing:
- a pipetting conduit (11) at least partly filled with working gas (34);
- a pressure-modifying apparatus (14, 22) for modifying the pressure of the working gas (34); and
- a control apparatus (24) for applying control to the pressure-modifying apparatus (14, 22),
the control apparatus (24) being embodied to apply control to the pressure-modifying apparatus (14, 22) so as to generate in the pipetting conduit (11), with respect to a reference holding pressure in the pipetting conduit (11) which is necessary for immovable holding of the metered-liquid quantity (32), an overpressure pulse having a pulse duration of no more than 40 ms, **characterized in that** the control apparatus (24) is further embodied to apply control to the pressure modification apparatus (14, 22), prior to generation of the overpressure pulse in the pipetting conduit (11) with respect to the reference holding pressure, so as to generate a negative pressure, to thereby move, prior to generation of the overpressure pulse, a metered-liquid quantity (32) received in the pipetting apparatus (10) a little way into the pipetting apparatus (10) and away from a pipetting opening (30), so that a pipetting-opening-proximal meniscus (32b) discharging a small metered-liquid dose of no more than 1 µl during the pulsed dispensation is located within a receiving space (28) of the pipetting apparatus (10) at a distance from the pipetting opening (30).

2. The pipetting apparatus (10) according to Claim 1,
**characterized in that** the control apparatus (24) is embodied to apply control to the pressure modification apparatus (14, 22), between the generation of two overpressure pulses that are each associated with a different one of two pulsed dispensing operations immediately successive to one another, so as to generate the reference holding pressure and then generate the negative pressure.

3. The pipetting apparatus (10) according to Claim 2,
**characterized in that** generation of the negative pressure encompasses generation of a first negative pressure, then generation of a pressure having a greater magnitude than the first negative pressure, and then generation of a second negative pressure.

4. The pipetting apparatus (10) according to Claim 3,
**characterized in that** the pressure of greater magnitude between the first and the second negative pressure is higher than the reference holding pressure.

5. The pipetting apparatus (10) according to one of the preceding claims, **characterized in that** the control apparatus (24) is embodied to apply control to the pressure modifying apparatus (14, 22), after generation of the negative pressure and before generation of the overpressure pulse, so as to generate the reference holding pressure.

6. The pipetting apparatus (10) according to one of the preceding claims, **characterized in that** herein it comprises a pressure sensor (38) for detecting the pressure of the working gas (34), the pressure sensor (38) being connected in signal-transferring fashion to the control apparatus (24) for transfer of its detected information, the control apparatus applying control to the pressure modification apparatus (14, 22) in accordance with the information detected by the pressure sensor (38).

7. The pipetting apparatus (10) according to one of the preceding claims, **characterized in that** it comprises a coupling configuration, passed through by the pipetting conduit (11), for temporary attachment of a pipetting tip (26).

8. The pipetting apparatus (10) according to Claim 7,
**characterized in that** it comprises a pipetting tip (26) having a counterpart coupling configuration for releasable coupling engagement with the coupling configuration, and having a pipetting opening (30) constituting a passthrough opening for metered liquid (32) during an aspiration operation and during a dispensing operation.

9. The pipetting apparatus (10) according to one of the preceding claims, **characterized in that** the pressure modifying apparatus (14, 22) encompasses
a magnetic piston (14) and electrically energizable coils (22), the control apparatus (24) being embodied to control the energization of the coils (22); generation of a negative pressure encompassing a displacement of the piston (14) in a first direction; and generation of the overpressure pulse encompassing a displacement of the piston (14) firstly in a second direction opposite to the first direction, and immediately thereafter in the first direction;
or encompasses two different working-gas pressure reservoirs, one at negative pressure and one at overpressure with respect to a reference pressure; each of the working-gas pressure reservoirs being connectable in pressure-transferring fashion to the pipetting conduit (11); the control apparatus being embodied to control an opening and a closing of the valves; generation of a negative pressure encompassing an opening and a closing of the negative-pressure valve, and generation of an overpressure pulse encompassing an opening and a closing of the negative-pressure valve and an opening and a closing of the overpressure valve.

10. A method for pulsed dispensing from a pipetting tip (26), at a dispensed volume of no more than 1 µl for a single dispensing operation, of metered liquid (32) received in the pipetting tip, encompassing the step of generating an overpressure pulse in a working gas (34) that is connected in pressure-transferring fashion to the received metered liquid (32) on a side facing away from a pipetting opening (30), so as thereby to detach a liquid droplet (36), on the side of the metered liquid (32) facing toward the pipetting opening (30), from the latter and accelerate it away from the metered liquid (32), **characterized in that** the method encompasses, before generation of the overpressure pulse, the following step:
- with respect to the reference holding pressure in the pipetting conduit (11) which is necessary for immovable holding of the metered-liquid quantity (32), generating a negative pressure in the working gas (34) and thereby moving the received metered liquid (32) away from the pipetting opening (30), accompanied by formation or enlargement of a gas volume (35) between the metered liquid (32) and the pipetting opening (30), so that a pipetting-opening-proximal meniscus (32b) discharging a small metered-liquid dose of no more than 1 µl during the pulsed dispensation is located within a receiving space (28) of the pipetting apparatus (10) at a distance from the pipetting opening (30).

11. The method according to Claim 10,
**characterized in that** it encompasses, after generation of the negative pressure but before generation of the overpressure pulse, the following step:
- elevating the pressure in the working gas (34) and thereby moving the received metered liquid (32) toward the pipetting opening (30).

12. The method according to Claim 11,
**characterized in that** it encompasses, after elevation of the pressure in the working gas (34) but before generation of the pressure pulse, the following steps:
- with respect to the reference holding pressure, generating a negative pressure in the working gas (34) and thereby moving the received metered liquid (32) away from the pipetting opening (30), accompanied by formation of a gas volume (35) between the metered liquid (32) and the pipetting opening (30).

## Revendications

1. Dispositif de pipetage (10) pour la distribution par impulsions de petites doses de liquide de dosage (36) d'au plus 1 µl à partir d'une plus grande quantité de liquide de dosage (32) prévue dans le dispositif de pipetage (10) au moyen d'un régulateur de pression gaz de travail (34), le dispositif de pipetage (10) comprenant:
- un canal de pipetage (11) rempli au moins partiellement de gaz de travail (34),
- un dispositif de changement de pression (14, 22) pour changer la pression du gaz de travail (34), et
- un dispositif de commande (24) pour commander le dispositif de changement de pression (14, 22),
dans lequel le dispositif de commande (24) est conçu pour le dispositif de changement de pression (14, 22) - sur la base d'une pression de référence de maintien dans le canal de pipetage (11), nécessaire pour maintenir immobile la quantité de liquide de dosage (32) - pour générer une impulsion de surpression dans le canal de pipetage (11) avec une durée d'impulsion ne dépassant pas 40 ms,
**caractérisé par le fait que** le dispositif de commande (24) est en outre conçu pour commander le dispositif de changement de pression (14, 22) avant la génération de l'impulsion de surpression dans le canal de pipetage (11) sur la base de la pression de référence de maintien pour générer une pression négative, afin de déplacer ainsi une quantité de liquide de dosage (32) reçue dans le dispositif de pipetage (10) à une petite distance d'une ouverture de pipetage (30) dans le dispositif de pipetage (10) avant la génération de l'impulsion de surpression, de sorte qu'une petite dose de liquide de dosage (36) soit disposée à pas plus de 1 ulg du ménisque (32b) de l'ouverture de la pipette pour la distribution par impulsion dans un espace de réception (28) du dispositif de pipetage (10) à distance de l'ouverture de pipetage (30).

2. Dispositif de pipetage (10) selon la revendication 1,
**caractérisé par le fait que** le dispositif de commande (24) est conçu pour générer le dispositif de changement de pression (14, 22) entre la génération de deux impulsions de surpression, qui sont chacune affectées à un différent de deux processus de distribution de type impulsion immédiatement consécutifs pour contrôler la pression de référence de maintien, puis pour générer la pression négative.

3. Dispositif de pipetage (10) selon la revendication 2,
**caractérisé par le fait que** la génération de la pression négative comprend la génération d'une première dépression, puis la génération d'une pression d'amplitude supérieure à la première pression négative puis la génération d'un deuxième pression négative.

4. Dispositif de pipetage (10) selon la revendication 3,
**caractérisé par le fait que** la pression plus élevée entre la première et la deuxième pression négative est supérieure à la pression de référence de maintien.

5. Dispositif de pipetage (10) selon l'une des revendications précédentes, **caractérisé par le fait que** le dispositif de commande (24) est conçu pour commander le dispositif de changement de pression (14, 22) après la génération de la pression négative et avant la génération de l'impulsion de pression positive pour générer la pression de référence de maintien.

6. Dispositif de pipetage (10) selon l'une des revendications précédentes, **caractérisé par le fait qu'**il comporte un capteur de pression (38) pour détecter la pression du gaz de travail (34), le capteur de pression (38) étant relié au dispositif de commande (24) pour la transmission de ses informations de détection, dans lequel le dispositif de commande contrôle le dispositif de changement de pression (14, 22) en fonction des informations de détection du capteur de pression (38).

7. Dispositif de pipetage (10) selon l'une des revendications précédentes, **caractérisé par le fait qu'**il présente une formation de couplage traversée par le canal de pipetage (11) pour le couplage temporaire d'une pointe de pipette (26).

8. Dispositif de pipetage (10) selon la revendication 7,
**caractérisé par le fait qu'**il présente une pointe de pipette (26) avec une contre-formation de couplage pour un engagement de couplage amovible avec la formation de couplage et avec une ouverture de pipette (30) comme ouverture de passage pour le dosage de liquide (32) pendant un processus d'aspiration et pendant un processus de distribution.

9. Dispositif de pipetage (10) selon l'une des revendications précédentes, **caractérisé par le fait que** le dispositif de changement de pression (14, 22) comprend: un piston magnétique (14) et des bobines (22) à alimentation électrique, le dispositif de commande (24) étant conçu pour alimenter les bobines de commande (22), dans lequel une génération d'une pression négative comprend un déplacement du piston (14) dans une première direction, et dans lequel la génération de l'impulsion de surpression comprend un déplacement du piston (14) d'abord dans la deuxième direction opposée et immédiatement après la première direction, ou deux réservoirs de pression de gaz de travail différents, l'un avec surpression et l'autre avec pression négative sur la base d'une pression de référence, chacun des réservoirs de pression de gaz de travail pouvant être raccordé au canal de pipetage (11) pour transmettre la pression via des vannes, le dispositif de commande étant conçu pour assurer une commande d'ouverture et de fermeture des vannes, où la génération comprend une dépression de l'ouverture et la fermeture de la soupape à vide, et dans lequel la génération d'une impulsion de surpression comprend l'ouverture et la fermeture de la soupape à vide et l'ouverture et la fermeture de la soupape de surpression.

10. Procédé de distribution par impulsions d'un liquide doseur (32) prélevé dans une pointe de pipette (26) à partir de la pointe de pipette (26) avec un volume de distribution ne dépassant pas 1 ul pour un processus de distribution unique, comprenant l'étape consistant à générer une impulsion de surpression dans un gaz de travail (34), qui sur un côté opposé à une ouverture de pipetage (30) est en communication avec le liquide de dosage reçu (32) pour libérer une goutte de liquide (36) du liquide de dosage (32) du côté du liquide de dosage (32) faisant face à l'orifice de pipetage (30) et pour accélérer l'écart du liquide de dosage (32),
**caractérisé par le fait que** le procédé comprend l'étape suivante avant de générer l'impulsion de surpression:
- par rapport à la pression de référence de maintien dans le canal de pipetage (11), nécessaire pour maintenir immobile la quantité de liquide de dosage (32): générer une pression négative dans le gaz de travail (34) et déplacer ainsi le liquide de dosage (32) reçu à distance de l'ouverture de pipetage (30), avec formation ou élargissement d'un volume de gaz (35) entre le liquide de dosage (32) et l'ouverture de pipette (30), afin de disposer une petite dose de liquide (36) ne dépassant pas 1 µl d'ouverture de pipetage de distribution à proximité du ménisque (32b) dans la distribution de type impulsion dans un espace de réception (28) du dispositif de pipetage (10) à une distance de l'ouverture de pipetage (30).

11. Procédé selon la revendication 10,
**caractérisé par le fait qu'**il comprend l'étape suivante après la génération de la pression négative mais avant la génération de l'impulsion de pression négative:
- Augmenter la pression dans le gaz de travail (34) et ainsi déplacer le liquide doseur (32) reçu vers l'ouverture de pipetage (30).

12. Procédé selon la revendication 11, **caractérisé par le fait qu'**après l'augmentation de la pression dans le gaz de travail (34) mais avant la génération de l'impulsion de surpression, il comprend les étapes suivantes:
- Générer une pression négative dans le gaz de travail (34) sur la base de la pression de référence de maintien et ainsi éloigner le liquide de dosage (32) reçu de l'ouverture de pipetage (30), avec formation d'un volume de gaz (35) entre le liquide de dosage (32) et l'ouverture de pipetage (30).
